(19) **Europäisches Patentamt European Patent Office Office européen des brevets**

(11) **EP 4 325 355 B1**

(12) **EUROPEAN PATENT SPECIFICATION**

(45) Date of publication and mention
of the grant of the patent:
**10.06.2026 Bulletin 2026/24**

(21) Application number: **22810275.2**

(22) Date of filing: **22.04.2022**

(51) International Patent Classification (IPC):
**G06F 9/451** (2018.01) **G06F 3/048** (2013.01)
**G06T 13/80** (2011.01)

(52) Cooperative Patent Classification (CPC):
**G06F 9/451; G06F 3/048; G06T 13/80**

(86) International application number:
**PCT/CN2022/088524**

(87) International publication number:
**WO 2022/247542 (01.12.2022 Gazette 2022/48)**

(54) **DYNAMIC EFFECT CALCULATING METHOD AND APPARATUS**

VERFAHREN UND VORRICHTUNG ZUR BERECHNUNG DYNAMISCHER EFFEKTE

PROCÉDÉ ET APPAREIL DE CALCUL D'EFFET DYNAMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.05.2021 CN 202110580596**
**02.06.2021 CN 202110616940**

(43) Date of publication of application:
**21.02.2024 Bulletin 2024/08**

(73) Proprietor: **Huawei Technologies Co., Ltd.**
**Longgang**
**Shenzhen, Guangdong 518129 (CN)**

(72) Inventors:
• **ZHOU, Shuai**
**Shenzhen, Guangdong 518129 (CN)**
• **WANG, Min**
**Shenzhen, Guangdong 518129 (CN)**
• **CHEN, Xu**
**Shenzhen, Guangdong 518129 (CN)**
• **XIE, Bing**
**Shenzhen, Guangdong 518129 (CN)**

(74) Representative: **Körber, Martin Hans et al**
**Mitscherlich PartmbB**
**Karlstraße 7**
**80333 München (DE)**

(56) References cited:
WO-A1-2017/092343    WO-A1-2020/207251
CN-A- 103 049 257    CN-A- 105 979 332
CN-A- 106 984 044    CN-A- 108 776 572
CN-A- 109 389 547    CN-A- 112 435 313
US-B1- 10 049 625

## Description

## TECHNICAL FIELD

This application relates to the field of terminal technologies, and in particular, to an animation calculation method and an apparatus.

## BACKGROUND

With continuous development of information technologies, electronic devices have become an indispensable tool in people's lives. For example, a user may install various different applications (application, APP) in an electronic device. Different apps can provide different service functions for users.

Currently, to bring better user experience to a user in a start phase or an exit phase of an application, an electronic device plays an animation in the start phase or the exit phase of the application. However, currently, the animation is executed in a UI thread of the application, and other matters are further processed when an animation is calculated in the UI thread. If the processing of the other matters takes a long time, which occupies a time for calculating the animation, some image frames in the animation are discarded in the UI thread. As a result, frame freezing occurs during playback of the animation. Therefore, resolving a problem that frame freezing occurs during playback of an animation is an urgent problem to be resolved.

WO 2017/092343 A1 discloses a video data detection method and device. The method comprises: extracting watermark timing information contained in frame data, detecting continuity of an image frame, and generating a detection result of a video.

## SUMMARY

This application provides an animation calculation method and apparatus. A new animation processing thread is created in a surface flinger (surface flinger, SF), where the animation processing thread is specifically used for animation calculation. This resolves a problem that some image frames in an animation are discarded because the animation calculation is not scheduled in time during calculation in a UI thread, and consequently frame freezing occurs during playback of the animation, so that the playback of the animation is smoother. The invention is defined in the independent claims. Additional features of the invention are provided in the dependent claims. In the following, parts of the description and drawings referring to embodiments which are not covered by the claims are not embodiments of the invention, but are examples useful for understanding the invention.

According to a first aspect, this application provides an animation calculation method. The method includes: An electronic device receives a first operation of a user, where the first operation is used to start playing a first animation of a first application. The electronic device displays a first image frame in the first animation based on the first operation, and determines second parameter information of a second image frame in the first animation based on first parameter information of the first image frame by using a surfaceflinger module. The electronic device composes the second image frame based on the second parameter information by using the surface flinger. The electronic device displays the second image frame.

The first animation may be a start animation or an exit animation. When the first animation is the start animation, the first operation is an operation of playing the start animation, and the first operation may be an operation of tapping an icon of the first application. When the first action effect is the exit animation, the first operation is an operation of playing the exit animation, and the first operation may be a sliding operation performed on a lower edge of the electronic device along an upward direction of a screen.

According to the method provided in the first aspect, the electronic device creates a new animation processing thread in the surface flinger, where the animation processing thread is specifically used for animation calculation. This resolves a problem that some image frames in an animation are discarded because the animation calculation is not scheduled in time during calculation in a UI thread, and consequently frame freezing occurs during playback of the animation, so that the playback of the animation is smoother.

With reference to the first aspect, in a possible implementation, before the electronic device displays the first image frame in the first animation, the electronic device creates a new animation processing thread in the surface flinger. That the electronic device determines second parameter information of a second image frame in the first animation based on first parameter information of the first image frame by using a surfaceflinger module includes: The electronic device determines the second parameter information of the second image frame based on the first parameter information of the first image frame by using the animation processing thread. In this way, the electronic device creates the new animation processing thread on the surface flinger side, so that task items of animation calculation of all applications in the electronic device can be processed in an animation processing thread area on the surface flinger side. Therefore, the task items of the animation calculation of all the applications in the electronic device can be centrally scheduled. In addition, this resolves a problem that some image frames in the animation are discarded because the animation calculation is not scheduled in time during calculation in the UI thread, and consequently frame freezing occurs during playback of the animation, so that the playback of the animation is smoother.

With reference to the first aspect, in a possible implementation, that the electronic device determines second parameter information of a second image frame based on first parameter information of the first image frame by using a surface flinger includes: The electronic device obtains the second parameter information through an interpolation operation based on the first parameter information by using the surface flinger. That is, the surface flinger calculates, by using an interpolation algorithm, parameter information of a next image frame based on initial parameter information of an image frame currently displayed in the start animation or the exit animation. In this way, an animation effect displayed by the electronic device is smoother when the electronic device obtains, by using the interpolation algorithm, the image frame composed based on the parameter information of the image frame to play the animation.

According to the interpolation algorithm, the parameter information of the next image frame may be obtained based on the parameter information of the current image frame in the animation by using the following formulas:

$$a=k*x/m \text{ Formula (1)}$$

$$V=v+a*t \text{ Formula (2)}$$

$$P=p+V*t \text{ Formula (3)}$$

As shown in Formula (1), Formula (2), and Formula (3), according to the interpolation algorithm, target parameter information may be obtained based on preset parameter information of the image frame by using Formula (1), Formula (2), and Formula (3). In Formula (1), Formula (2), and Formula (3), a represents an acceleration, and k represents rigidity. It can be learned that k=-F/x according to the Hooke's law of the spring, where x represents a length of a spring deformation, F represents a force received when the length of the spring deformation is x, and F may be represented as F=m*a according to a Newton mechanical formula, where m is an instruction of an object. It can be learned that Acceleration a=-k*x/m according to the formula k=-F/x and the formula F=m*a.

v represents an initial speed of the object, V represents a speed at a next moment of the object, P represents an initial location of the object, p represents a location at the next moment of the object, and t represents parameter information that is currently calculated by the electronic device 100 and that is of a specific image frame in the start animation or the exit animation. It should be noted that, when the electronic device 100 calculates parameter information of an image frame in the start animation, v in Formula (3) is a positive number. When the electronic device 100 calculates parameter information of an image frame in the exit animation, v in Formula (3) is a negative number.

With reference to the first aspect, in a possible implementation, the first image frame is a 1st image frame

in the first animation; and before the electronic device determines the second parameter information of the second image frame in the first animation based on first parameter information of the first image frame by using the surface flinger, the method further includes: obtaining the first parameter information through the first application by using the surface flinger. When determining parameter information of an image frame at a next moment in real time by using the interpolation algorithm, the electronic device needs to know the parameter information of the initial image frame in the first animation. Herein, the first image frame is an initial image frame in the first animation. The electronic device 100 may obtain the second parameter information of the second image frame based on the first parameter information of the first image frame, and the like.

With reference to the first aspect, in a possible implementation, after the electronic device displays the second image frame, the method further includes: The electronic device receives a second operation of the user, where the second operation is used to start playing a second animation of the first application. The electronic device determines, based on the second operation, third parameter information of a third image frame based on the second parameter information by using the surface flinger, where the third image frame is a 1st image frame in the second animation.

The electronic device composes the third image frame based on the third parameter information by using the surface flinger. The electronic device displays the third image frame.

Herein, the first operation is an operation of playing a start animation, the second operation is an operation of playing an exit animation, and the third image frame is a 1st image frame in the second animation. The electronic device determines the third parameter information of the third image frame based on the second parameter information of the second image frame, that is, the parameter information of the 1st image frame in the exit animation is obtained based on a last image frame displayed in the start animation. The last image frame displayed in the start animation may be a last image frame in the start animation, or may be any image frame before the last image frame in the start animation. In this way, an effect of the exit animation displayed by the electronic device is smoother when the electronic device obtains, by using the interpolation algorithm, the image frame composed based on the parameter information of the image frame to play the animation.

With reference to the first aspect, in a possible implementation, the second image frame is a last image frame in the first animation; and before the electronic device receives the second operation of the user, the method further includes: The electronic device displays a first user interface of the first application after playing the first animation. That is, the last image frame displayed in the start animation may be the last image frame in the start animation.

In another possible implementation, when the electronic device displays the second image frame, the electronic device receives the second operation of the user. That is, the electronic device receives the second operation of the user in a process of playing the start animation. Herein, the second image frame may be a last image frame in the start animation, or may be any image frame before the last image frame in the start animation.

With reference to the first aspect, in a possible implementation, the first parameter information includes any one or more of the following: a location of a central point of the first image frame, a window size of the first image frame, transparency of the first image frame, and a rounded corner size of the first image frame; the second parameter information includes any one or more of the following: a location of a central point of the second image frame, a window size of the second image frame, transparency of the second image frame, and a rounded corner size of the second image frame; and the third parameter information includes any one or more of the following: a location of a central point of the third image frame, a window size of the third image frame, transparency of the third image frame, and a rounded corner size of the third image frame.

According to a second aspect, this application provides an electronic device. The electronic device includes one or more processors and one or more memories. The one or more memories are coupled to the one or more processors, the one or more memories are configured to store computer program code, the computer program code includes computer instructions, and the one or more processors invoke the computer instructions, to enable the electronic device to perform the following operations: receiving a first operation of a user, where the first operation is used to start playing a first animation of a first application; displaying a first image frame in the first animation based on the first operation, and determining second parameter information of a second image frame in the first animation based on first parameter information of the first image frame by using a surfaceflinger module; composing the second image frame based on the second parameter information by using the surface flinger; and displaying the second image frame. The first animation may be a start animation or an exit animation. When the first animation is the start animation, the first operation is an operation of playing the start animation, and the first operation may be an operation of tapping an icon of the first application. When the first action effect is the exit animation, the first operation is an operation of playing the exit animation, and the first operation may be a sliding operation performed on a lower edge of the electronic device along an upward direction of a screen.

According to the method provided in the first aspect, the electronic device creates a new animation processing thread in the surface flinger, where the animation processing thread is specifically used for animation calculation. This resolves a problem that some image frames in an animation are discarded because the animation calculation is not scheduled in time during calculation in a UI thread, and consequently frame freezing occurs during playback of the animation, so that the playback of the animation is smoother.

With reference to the second aspect, in a possible implementation, before the electronic device displays the first image frame in the first animation, the one or more processors are specifically configured to invoke the computer instructions, to enable the electronic device to perform the following operations:
creating a new animation processing thread in the surface flinger; and determining the second parameter information of the second image frame based on the first parameter information of the first image frame by using the animation processing thread. In this way, the electronic device creates the new animation processing thread on the surface flinger side, so that task items of animation calculation of all applications in the electronic device can be processed in an animation processing thread area on the surface flinger side. Therefore, the task items of the animation calculation of all the applications in the electronic device can be centrally scheduled. In addition, this resolves a problem that some image frames in the animation are discarded because the animation calculation is not scheduled in time during calculation in the UI thread, and consequently frame freezing occurs during playback of the animation, so that the playback of the animation is smoother.

With reference to the second aspect, in a possible implementation, the one or more processors are specifically configured to invoke the computer instructions, to enable the electronic device to perform the following operation: obtaining the second parameter information through an interpolation operation based on the first parameter information by using the surface flinger. In this way, an animation effect displayed by the electronic device is smoother when the electronic device obtains, by using the interpolation algorithm, the image frame composed based on the parameter information of the image frame to play the animation.

According to the interpolation algorithm, the parameter information of the next image frame may be obtained based on the parameter information of the current image frame in the animation by using the following formulas:

$$a = k * x / m \quad \text{Formula (1)}$$

$$V = v + a * t \quad \text{Formula (2)}$$

$$P = p + V * t \quad \text{Formula (3)}$$

As shown in Formula (1), Formula (2), and Formula (3), according to the interpolation algorithm, target parameter information may be obtained based on preset parameter information of the image frame by using Formula (1), Formula (2), and Formula (3). In Formula (1), Formula (2), and Formula (3), a represents an acceleration, and k represents rigidity. It can be learned that k=-F/x according to the Hooke's law of the spring, where x represents a length of a spring deformation, F represents a force received when the length of the spring deformation is x, and F may be represented as F=m*a according to a Newton mechanical formula, where m is an instruction of an object. It can be learned that Acceleration a=-k*x/m according to the formula k=-F/x and the formula F=m*a.

v represents an initial speed of the object, V represents a speed at a next moment of the object, P represents an initial location of the object, p represents a location at the next moment of the object, and t represents parameter information that is currently calculated by the electronic device 100 and that is of a specific image frame in the start animation or the exit animation. It should be noted that, when the electronic device 100 calculates parameter information of an image frame in the start animation, v in Formula (3) is a positive number. When the electronic device 100 calculates parameter information of an image frame in the exit animation, v in Formula (3) is a negative number.

With reference to the second aspect, in a possible implementation, the first image frame is a 1st image frame in the first animation; and before the electronic device determines the second parameter information of the second image frame in the first animation based on the first parameter information of the first image frame by using the surface flinger, the one or more processors are specifically configured to invoke the computer instructions, to enable the electronic device to perform the following operation: obtaining the first parameter information through the first application by using the surface flinger. When determining parameter information of an image frame at a next moment in real time by using the interpolation algorithm, the electronic device needs to know the parameter information of the initial image frame in the first animation. Herein, the first image frame is an initial image frame in the first animation. The electronic device 100 may obtain the second parameter information of the second image frame based on the first parameter information of the first image frame, and the like.

With reference to the second aspect, in a possible implementation, after the electronic device displays the second image frame, the one or more processors are specifically configured to invoke the computer instructions, to enable the electronic device to perform the following operations: receiving, by the electronic device, a second operation of the user, where the second operation is used to start playing a second animation of the first application; determining, by the electronic device based on the second operation, third parameter information of a third image frame based on the second parameter information by using the surface flinger, where the third image frame is a 1st image frame in the second animation;

composing, by the electronic device, the third image frame based on the third parameter information by using the surface flinger; and displaying, by the electronic device, the third image frame.

Herein, the first operation is an operation of playing a start animation, the second operation is an operation of playing an exit animation, and the third image frame is a 1st image frame in the second animation. The electronic device determines the third parameter information of the third image frame based on the second parameter information of the second image frame, that is, the parameter information of the 1st image frame in the exit animation is obtained based on a last image frame displayed in the start animation. The last image frame displayed in the start animation may be a last image frame in the start animation, or may be any image frame before the last image frame in the start animation. In this way, an effect of the exit animation displayed by the electronic device is smoother when the electronic device obtains, by using the interpolation algorithm, the image frame composed based on the parameter information of the image frame to play the animation.

With reference to the second aspect, in a possible implementation, the second image frame is a last image frame in the first animation; and before the electronic device receives the second operation of the user, the one or more processors are specifically configured to invoke the computer instructions, to enable the electronic device to perform the following operation: displaying a first user interface of the first application after playing the first animation. That is, the last image frame displayed in the start animation may be the last image frame in the start animation.

In another possible implementation, the one or more processors are specifically configured to invoke the computer instructions, to enable the electronic device to perform the following operation: receiving, by the electronic device, the second operation of the user when the electronic device displays the second image frame. That is, the electronic device receives the second operation of the user in a process of playing the start animation. Herein, the second image frame may be a last image frame in the start animation, or may be any image frame before the last image frame in the start animation.

With reference to the second aspect, in a possible implementation, the first parameter information includes any one or more of the following: a location of a central point of the first image frame, a window size of the first image frame, transparency of the first image frame, and a rounded corner size of the first image frame; the second parameter information includes any one or more of the following: a location of a central point of the second image frame, a window size of the second image frame, transparency of the second image frame, and a rounded corner size of the second image frame; and the third parameter information includes any one or more of the following: a location of a central point of the third image frame, a window size of the third image frame, transparency of the third image frame, and a rounded corner size of the third image frame.

According to a third aspect, this application provides a computer-readable storage medium, including instructions. When the instructions are run on an electronic device, the electronic device is enabled to perform the animation calculation method according to any one of the possible implementations of any one of the foregoing aspects.

According to a fourth aspect, this application provides a computer program product including instructions. When the computer program product runs on an electronic device, the electronic device is enabled to perform the animation calculation method according to any one of the possible implementations of any one of the foregoing aspects.

BRIEF DESCRIPTION OF DRAWINGS

FIG. 1A to FIG. 1M are diagrams of UIs of a group of start animations according to an embodiment of this application;

FIG. 2A to FIG. 2M are diagrams of UIs of another group of start animations according to an embodiment of this application;

FIG. 3A to FIG. 3E are diagrams of UIs of another group of start animations according to an embodiment of this application;

FIG. 4A and FIG. 4B are schematic diagrams of motion tracks of central points of image frames in a group of animations according to an embodiment of this application;

FIG. 5A and FIG. 5B are a schematic diagram of playing a start animation and playing an exit animation by an electronic device 100 according to an embodiment of this application;

FIG. 6 is a working principle diagram of processing animation calculation in a UI thread of a first application according to an embodiment of this application;

FIG. 7 is a schematic diagram of a frame loss caused by processing an image frame in a UI thread according to an embodiment of this application;

FIG. 8 is a schematic diagram of a structure of an electronic device 100 according to an embodiment of this application;

FIG. 9 is a block diagram of a software structure of an electronic device 100 according to an embodiment of this application;

FIG. 10 is a schematic diagram of multi-linear running of a surfaceflinger module according to an embodiment of this application;

FIG. 11 is a schematic diagram of effects of animation curves of several interpolation algorithms according to an embodiment of this application;

FIG. 12A and FIG. 12B are another schematic diagram of playing a start animation and playing an exit animation by an electronic device 100 according to an embodiment of this application;

FIG. 13 is a flowchart of an animation calculation method according to an embodiment of this application; and

FIG. 14 is a schematic diagram of parameter calculation of an image frame in an animation thread in a surfaceflinger module, and an image frame and a display image frame in a composed animation according to an embodiment of this application.

DESCRIPTION OF EMBODIMENTS

The following clearly and completely describes technical solutions in embodiments of this application with reference to the accompanying drawings. In descriptions of embodiments of this application, unless otherwise specified, "/" indicates "or". For example, A/B may indicate A or B. The term "or" in this specification merely describes an association relationship for describing associated objects, and indicates that three relationships may exist. For example, A or B may indicate the following three cases: Only A exists, both A and B exist, and only B exists. In addition, in the descriptions of embodiments of this application, "a plurality of" means two or more.

The terms "first" and "second" mentioned below are merely intended for the purpose of description, and shall not be understood as an indication or implication of relative importance or implicit indication of a quantity of indicated technical features. Therefore, a feature limited by "first" and "second" may explicitly or implicitly include one or more features. In the descriptions of the embodiments of this application, unless otherwise specified, "a plurality of" means two or more.

The term "user interface (user interface, UI) in the specification, claims, and accompanying drawings of this application is a medium interface for interaction and information exchange between a user and an application or an operating system, and implements conversion between an internal form of information and a form acceptable to the user. A user interface of the application is source code written in a specific computer language such as Java or an extensible markup language (extensible markup language, XML). The source code of the interface is parsed and rendered on a terminal device, and finally is presented as user-recognizable content, for example, a control such as an image, a text, or a button. The control (control) is also referred to as a widget (widget), and is a basic element in the user interface. Typical controls include a toolbar (toolbar), a menu bar (menu bar), an input box, a button (button), a scrollbar (scrollbar), an image, and a text. An attribute and content of the control in the interface are defined by using a tag or a node. For example, the control included in the interface is defined in the XML by using a node such as <TextView>, <ImgView>, or <VideoView>. One node corresponds to one control or attribute in the interface. After being parsed and rendered, the node is displayed as user-visible content. In addition, interfaces of many applications such as a hybrid application (hybrid application) usually further include a web page. The web page, also referred to as a page, may be understood as a special control embedded in an application interface. The web page is source code written in a particular computer language, for example, a hypertext markup language (hypertext markup language, HTML), a cascading style sheet (cascading style sheet, CSS), or JavaScript (JavaScript, JS). A source code of the web page may be loaded and displayed as user-recognizable content by a browser or a web page display component with a function similar to that of the browser. Specific content included in the web page is also defined by using a tag or a node in the source code of the web page. For example, an element and an attribute of the web page are defined in the HTML by using <p>, <img>, <video>, and <canvas>.

A frequently-used representation form of the user interface is a graphical user interface (graphical user interface, GUI), and is a user interface that is displayed in a graphical manner and that is related to a computer operation. The user interface may be an interface element such as a window or a control displayed on a display of the electronic device.

The technical terms in embodiments of this application are first explained.

1. Animation

The animation means that locations, sizes, display forms, and the like of M image frames are changed in a preset sequence, so that a user feels that a user interface displayed on an electronic device is more abundant.

The animation in embodiments of this application includes a start animation and an exit animation. A phase from a time at which an application receives an operation performed by the user to trigger start of an application to a time before the electronic device 100 displays a home screen of the application is referred to as a start phase of the application, and a time consumed in the start phase is referred to as a start time. Because the electronic device 100 needs to perform initialization and pre-loading work on the application in the start phase of the application, and the start time is long, to bring better user experience to the user, the electronic device 100 plays a segment of start animation in the start phase of the application. The start animation may mean that N image frames are displayed in the user interface of the electronic device 100 in a floating manner in a preset sequence based on a preset window size, a preset display time, a preset display location, preset transparency, a preset display element, and the like. A phase that is after the application is started and that is from a time at which the electronic device 100 receives an operation of exiting the application by the user to a time at which the electronic device 100 displays the home screen is referred to as an exit phase of the application, and a time consumed in the exit phase is referred to as an exit time.

Because the exit time of the application is long, to bring better user experience to the user, the electronic device 100 plays a segment of exit animation in the exit phase of the application. The exit animation may mean that N image frames are displayed in the user interface of the electronic device 100 in a floating manner in a preset sequence based on a preset window size, a preset display time, a preset display location, preset transparency, a preset display element, and the like.

It may be understood that the start animation and the exit animation may be mutually inverse animations, or may be two different animations. This is not limited herein in this application.

(1) Start animation

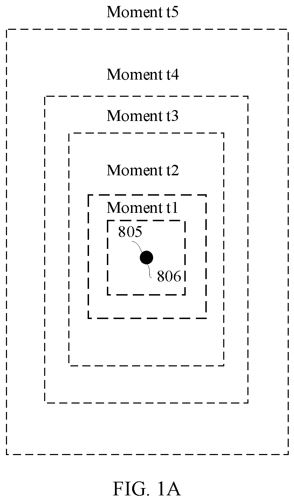

FIG. 1A to FIG. 1M, FIG. 2A to FIG. 2M, and FIG. 3A to FIG. 3E show examples of diagrams of UIs of several start animations.

As shown in FIG. 1A to FIG. 1M, in some embodiments, a size of each image frame gradually increases from a preset minimum size to a preset maximum size.

In a possible implementation, a central point of an image frame in the start animation overlaps a central point of a display of the electronic device 100, and a size of each image frame may first gradually increase from a preset minimum size to a preset maximum size as time moves.

FIG. 1A shows an example of a schematic diagram of a size change of an image frame in a start animation.

For example, at a moment t1, the electronic device 100 receives and responds to an operation of tapping an icon of an application by the user, where a size of the icon of the application remains unchanged, and an original size of the application may be referred to as a preset minimum size. Then, at a moment t2, the size of the icon of the application gradually increases. At a moment t3, the size of the icon of the application no longer increases, and the electronic device 100 displays a rectangular frame, where a size of the rectangular frame is a size of a rectangular frame shown at the moment t3. At a moment t4, a size of a rectangular frame increases from the size at the moment t3 to the size of the rectangular frame at the moment t4. At a moment t5, a size of a rectangular frame increases from the size at the moment t4 to the size of the rectangular frame at the moment t5, where the size of the rectangular frame at the moment t5 is referred to as a preset maximum size.

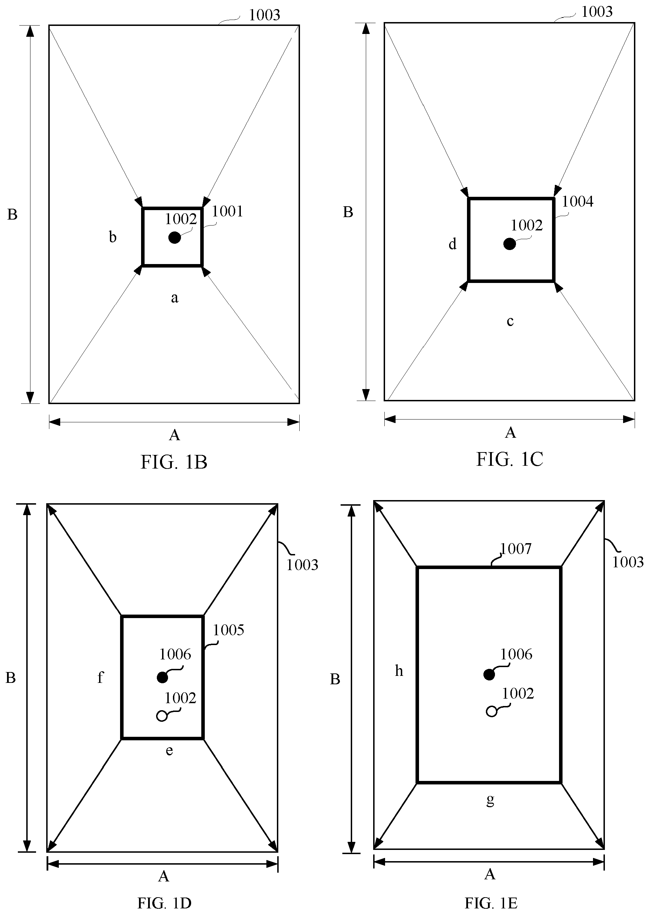

As shown in FIG. 1B, in a start animation, a size of a first image frame 1001 is consistent with the size of the icon of the application, and a central point of the first image frame 1001 and a central point of the icon of the application are at a same location, that is, both are at a location 1002. The size of the first image frame 1001 is a minimum size (that is, a width is a, and a height is b). The first image frame 1001 may gradually increase from a preset minimum size to a preset maximum size of an image frame 1003, where the preset maximum size is of a width A and a length B.

As shown in FIG. 1C, in a start animation, the first image frame 1001 gradually increases from the preset minimum size to a size of an image frame 1004, and a central point of the image frame 1004 and the central point of the icon of the application are at a same location, that is, both are at a location 1002. The size of the image frame 1004 is of a width c and a height d. c is greater than a, and d is greater than b.

As shown in FIG. 1D, in a start animation, the size of the image frame 1004 gradually increases to a size of an image frame 1005, and a center of the image frame 1005 is no longer at a same location as the central point 1002 of the icon of the application, but is at a same location as a central point of the image frame 1003, that is, both are at a location 1006. The size of the image frame 1005 is of a width e and a height f. f is greater than d.

As shown in FIG. 1E, in a start animation, the size of the image frame 1005 gradually increases to a size of an image frame 1007, and a center of the image frame 1007 is no longer at a same location as the central point 1002 of the icon of the application, but is at a same location as the central point of the image frame 1003, that is, both are at a location 1006. The size of the image frame 1007 is of a width g and a height h. g is greater than e, and h is greater than f.

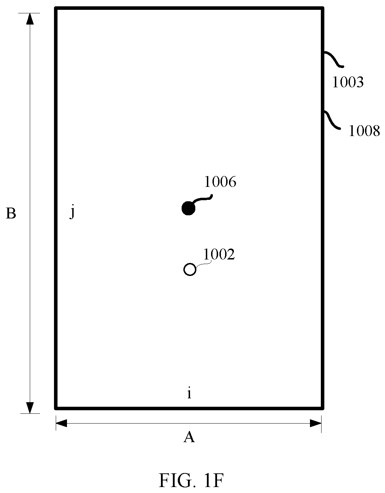

As shown in FIG. 1F, in a start animation, the size of the image frame 1007 gradually increases to a size of an image frame 1008, and a center of the image frame 1008 is no longer at a same location as the central point 1002 of the icon of the application, but is at a same location as the central point of the image frame 1003, that is, both are at a location 1006. The size of the image frame 1007 is of a width i and a height j. i is greater than g, and j is greater than h. i is equal to A, and j is equal to B.

During start of the application, the electronic device 100 may play a start animation in a start phase of the application, where the start animation includes a plurality of image frames, and display locations and sizes of the image frames may be different. The electronic device 100 sequentially displays the plurality of image frames in sequence.

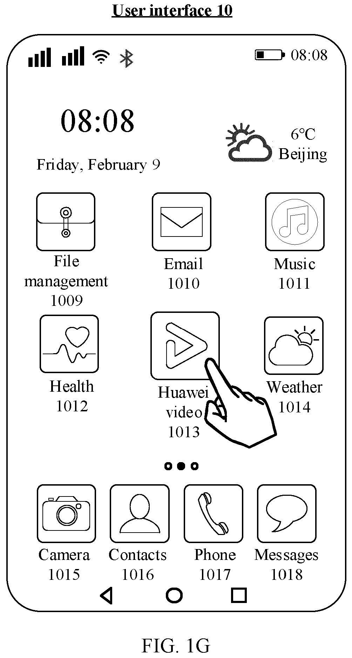

For example, FIG. 1G shows an example of a user interface 10 of the electronic device 100. The user interface 10 may include icons of some applications, such as an icon 1009 of File management, an icon 1010 of Email, an icon 1011 of Music, an icon 1012 of Health, an icon 1013 of Huawei video, an icon 1014 of Whether, an icon 1015 of Camera, an icon 1016 of Contacts, an icon 1017 of Phone, and an icon 1018 of Messages. In some embodiments, the user interface 10 may include icons of more or fewer applications. In some embodiments, the user interface 10 may include icons of some applications that are different from those shown in FIG. 1G. This is not limited herein.

The electronic device 100 may receive and respond to a user operation (for example, a single-tap operation) performed on the icon 1013 of Huawei video in the user interface 10, and then the Huawei video application is started.

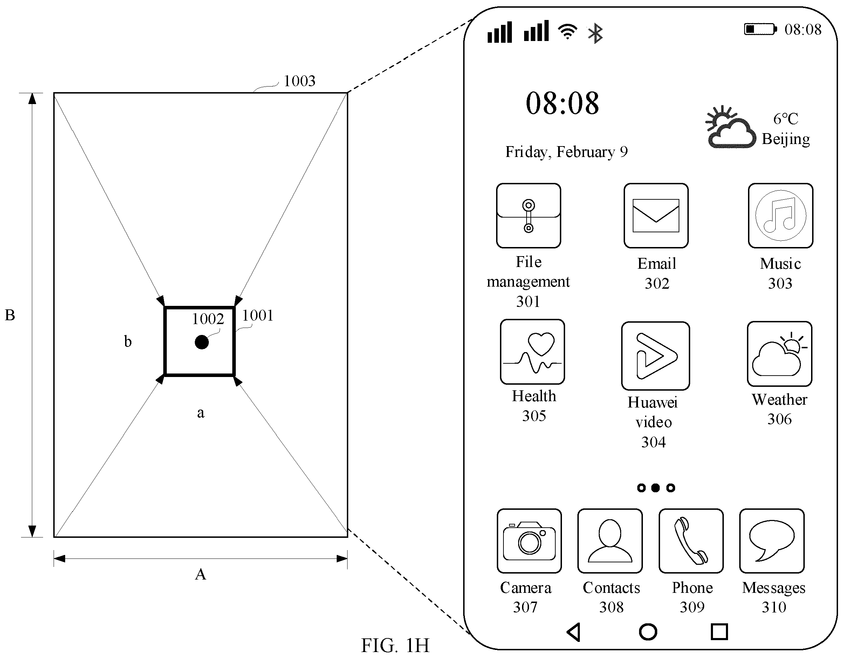

As shown in FIG. 1H, image content of the first image frame 1001 is the same as image content of the icon of the Huawei video application, the size of the first image frame 1001 is the same as a size of the icon of the Huawei video application, and a central point of the first image frame 1001 is at a same location as a central point of the icon of the Huawei video application.

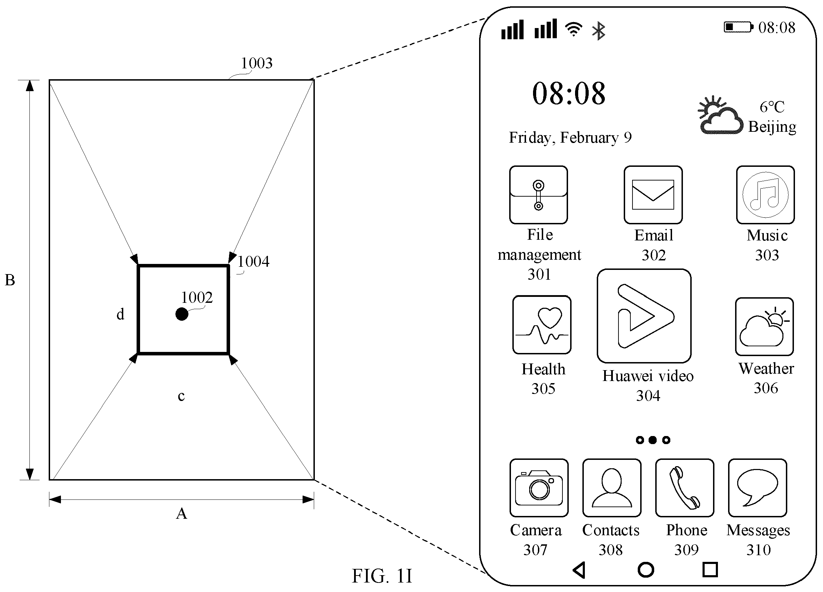

As shown in FIG. 1I, the size of the first image frame 1001 gradually increases from a preset minimum size to a size of the image frame 1004, image content of the image frame 1004 is the same as image content of the icon of the Huawei video application, and a central point of the image frame 1004 is at a same location as a central point of the icon of the Huawei video application.

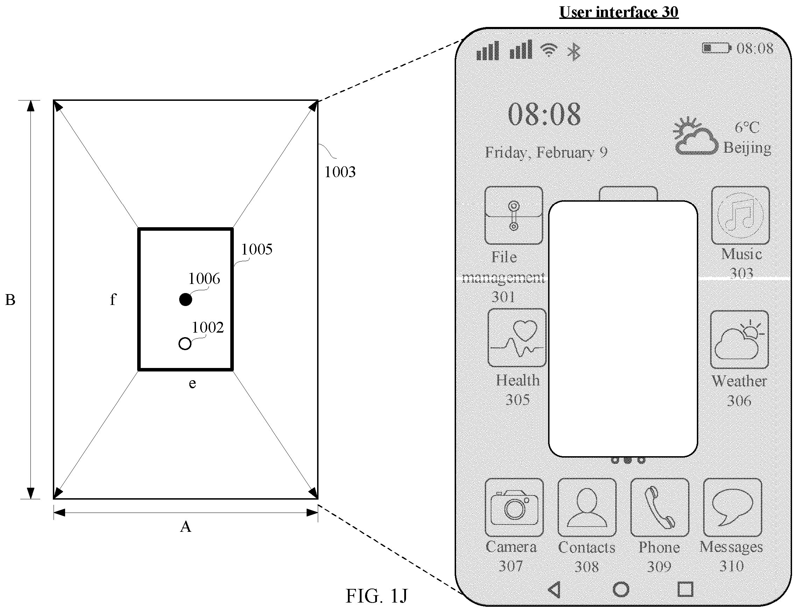

As shown in FIG. 1J, the size of the image frame 1004 gradually increases to a size of the image frame 1005, and image content of the image frame 1005 may not display any element, or may display one or more elements. This is not limited herein in this application. In addition, a center of the image frame 1005 is no longer at a same location as a central point 1002 of the icon of the Huawei video application, but is at a same location as a central point of the display of the electronic device 100.

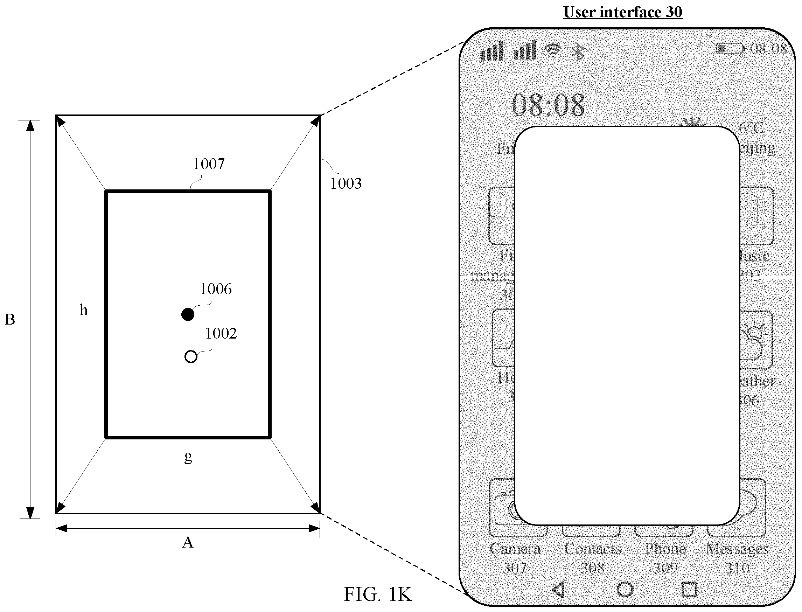

As shown in FIG. 1K, the size of the image frame 1005 gradually increases to a size of the image frame 1007, and image content of the image frame 1007 may not display any element, or may display one or more elements. This is not limited herein in this application. In addition, a center of the image frame 1007 is no longer at a same location as a central point 1002 of the icon of the Huawei video application, but is at a same location as a central point of the display of the electronic device 100.

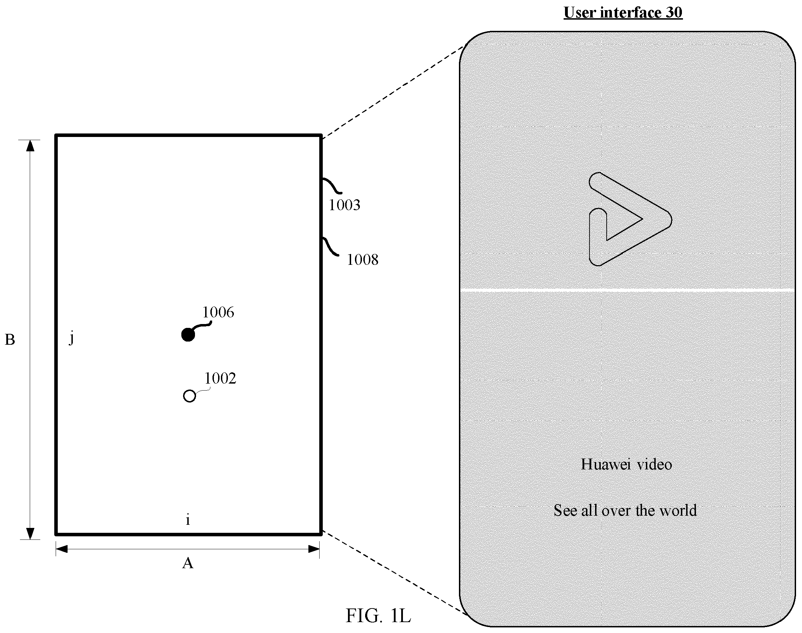

As shown in FIG. 1L, the size of the image frame 1007 gradually increases to a size of the image frame 1008, and image content of the image frame 1008 may not display any element, or may display one or more elements. This is not limited herein in this application. As shown in FIG. 1L, the image content of the image frame 1008 includes the icon of Huawei video and texts "Huawei video" and "See all over the world". In addition, a center of the image frame 1008 is no longer at a same location as a central point 1002 of the icon of the Huawei video application, but is at a same location as a central point of the display of the electronic device 100.

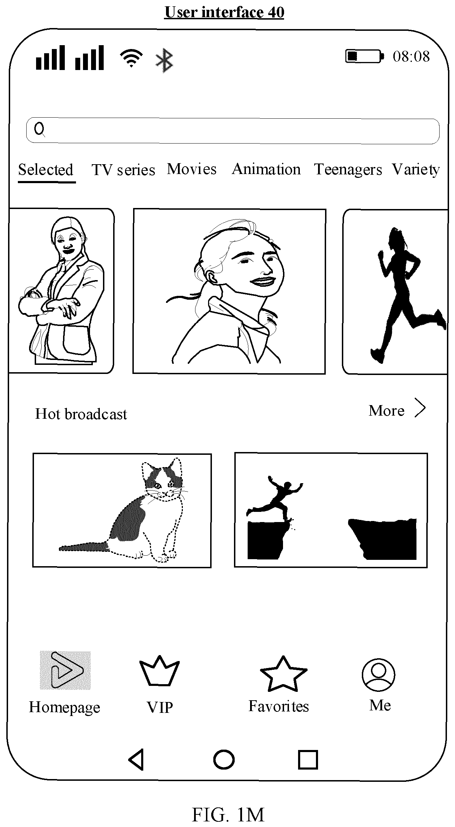

As shown in FIG. 1M, after playback of the start animation of the electronic device 100 is completed, the electronic device 100 displays a main interface of the Huawei video application. The main interface of the Huawei video application includes one or more video images. The video image may be dynamic or static. In addition, the main interface may display a bottom menu bar, a search box, a sub-channel entry, and the like. This is not limited in embodiments of this application.

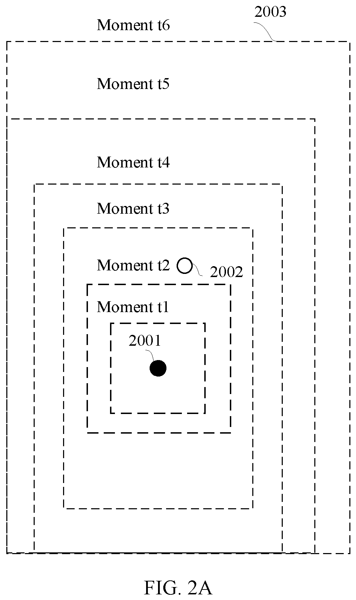

As shown in FIG. 2A to FIG. 2M, in some embodiments, in a start animation, a central point of an image frame changes in real time, a size of each image frame gradually increases from a preset minimum size to a preset maximum size, and any frame of the image frame is in contact with a frame of an image frame with the preset maximum size.

FIG. 2A shows an example of a schematic diagram of a size change of an image frame in another start animation.

For example, at a moment t1, the electronic device 100 receives and responds to an operation of tapping an icon of an application by a user, where a size of the icon of the application remains unchanged, and an original size of the icon of the application may be referred to as a preset minimum size. Then, at a moment t2, the size of the icon of the application gradually increases. At a moment t3, the size of the icon of the application no longer increases, and the electronic device 100 displays a rectangular frame, where a size of the rectangular frame is a size of a rectangular frame shown at the moment t3. At a moment t4, a size of a rectangular frame increases from the size at the moment t3 to the size of the rectangular frame at the moment t4, and a frame (for example, a lower frame) of the rectangular frame at the moment t4 overlaps a frame (for example, a lower frame) of the rectangular frame with the preset maximum size. At a moment t5, a size of a rectangular frame increases from the size at the moment t4 to the size of the rectangular frame at the moment t5, and another frame (for example, a left frame) of the rectangular frame at the moment t5 overlaps another frame (for example, a left frame) of the rectangular frame with the preset maximum size. At a moment t6, a size of a rectangular frame increases from the size at the moment t5 to the size of the rectangular frame at the moment t6, and the size of the rectangular frame at the moment t6 is referred to as a preset maximum size.

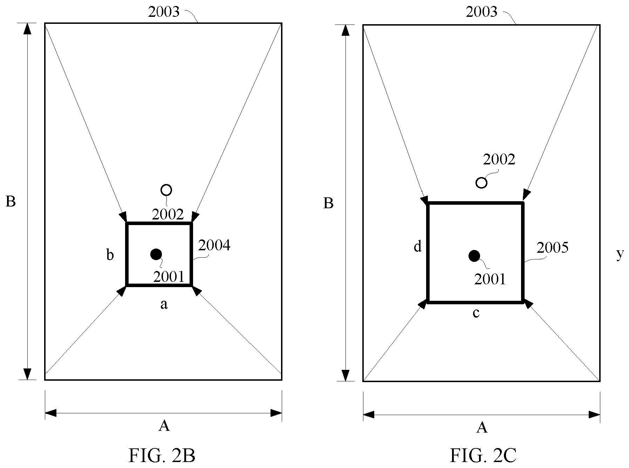

As shown in FIG. 2B, in a start animation, the size of the first image frame 2004 is consistent with the size of the icon of the application, a central point of the first image frame 2004 and a central point of the icon of the application are at a same location, that is, both are at a location 2001, and the central point of the first image frame 2004 does not overlap a central point 2002 of the display of the electronic device 100. The size of the first image frame 2004 is a minimum size (that is, a width is a, and a height is b). The first image frame 2004 may gradually increase from a preset minimum size to a preset maximum size of an image frame 2003, where the preset maximum size is of a width A and a length B.

As shown in FIG. 2C, in a start animation, the size of the first image frame 2004 gradually increases from the preset minimum size to a size of an image frame 2005, a central point of the image frame 2005 and a central point of the icon of the application are at a same location, that is, both are at a location 2001, and the central point of the image frame 2005 does not overlap a central point 2002 of the display of the electronic device 100. The size of the image frame 2005 is of a width c and a height d. c is greater than a, and d is greater than b.

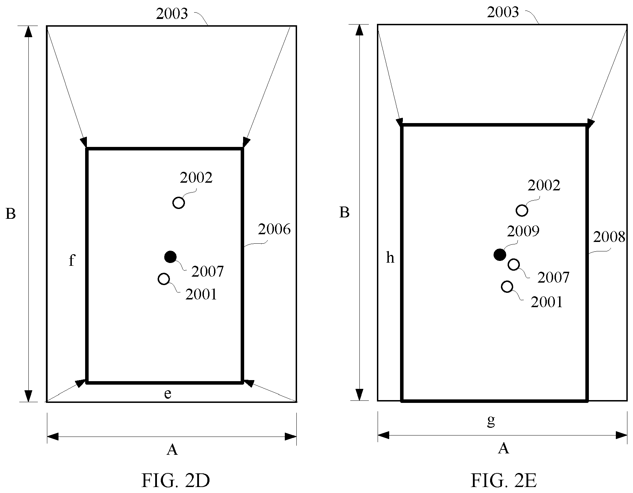

As shown in FIG. 2D, in a start animation, the size of the image frame 2005 gradually increases to a size of an image frame 2006, and a central point 2007 of the image frame 2006 is no longer at a same location as a central point 2001 of the icon of the application, and is not at a same location as a central point 2002 of the image frame 2003. The size of the image frame 2006 is of a width e and a height f. f is greater than d.

As shown in FIG. 2E, in a start animation, the size of the image frame 2006 gradually increases to a size of an image frame 2008, and any frame (for example, a lower frame) of the image frame 2008 overlaps a frame (for example, a lower frame) of the image frame 2003. In addition, a central point 2009 of the image frame 2008 is no longer at a same location as the central point 2001 of the icon of the application, is not at a same location as a central point 2007 of the image frame 2006, and is not at a same location as a central point 2002 of the image frame 2003. The size of the image frame 2008 is of a width g and a height h. g is greater than e, and h is greater than f.

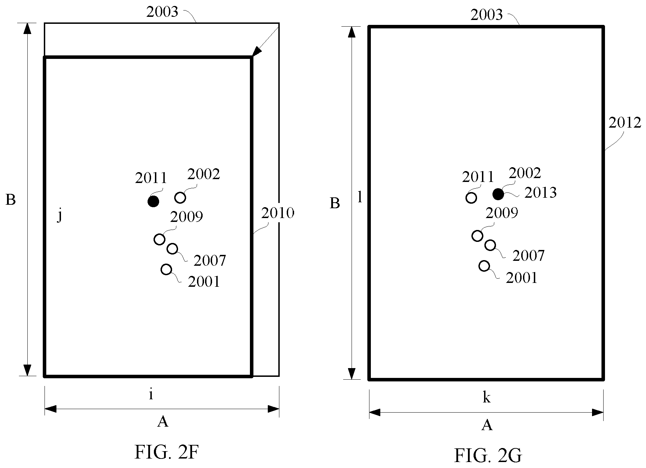

As shown in FIG. 2F, in a start animation, the size of the image frame 2008 gradually increases to a size of an image frame 2010, and any frame (for example, a lower frame) of the image frame 2010 overlaps a frame (for example, a lower frame) of the image frame 2003. Any other frame (for example, a left frame) of the image frame 2010 overlaps another frame (for example, a left frame) of the image frame 2003. In addition, a central point 2011 of the image frame 2010 is no longer at a same location as the central point 2001 of the icon of the application, is not at a same location as a central point 2007 of the image frame 2006, is not at a same location as a central point 2009 of the image frame 2008, and is not at a same location as a central point 2002 of the image frame 2003. The size of the image frame 2010 is of a width i and a height j. i is greater than g, and j is greater than h.

As shown in FIG. 2G, in a start animation, the size of the image frame 2010 gradually increases to a size of an image frame 2012, and all frames of the image frame 2012 overlap all frames of the image frame 2003. In addition, a central point 2013 of the image frame 2012 is not at a same location as the central point 2001 of the icon of the application, is not at a same location as a central point 2007 of the image frame 2006, is not at a same location as a central point 2009 of the image frame 2008, and is not at a same location as a central point 2011 of the image frame 2010, but is at a same location as a central point 2002 of the image frame 2003. The size of the image frame 2012 is of a width k and a height l. k is greater than i, and l is greater than j. k is equal to A, and j is equal to B.

During start of the application, the electronic device 100 may play a start animation in a start phase of the application, where the start animation includes a plurality of image frames, and display locations and sizes of the image frames may be different. The electronic device 100 sequentially displays the plurality of image frames in sequence.

For example, FIG. 1G shows an example of a user interface 10 of the electronic device 100. The user interface 10 may include icons of some applications, such as an icon 1009 of File management, an icon 1010 of Email, an icon 1011 of Music, an icon 1012 of Health, an icon 1013 of Huawei video, an icon 1014 of Whether, an icon 1015 of Camera, an icon 1016 of Contacts, an icon 1017 of Phone, and an icon 1018 of Messages. In some embodiments, the user interface 10 may include icons of more or fewer applications. In some embodiments, the user interface 10 may include icons of some applications that are different from those shown in FIG. 1G. This is not limited herein.

The electronic device 100 may receive and respond to a user operation (for example, a single-tap operation) performed on the icon 1013 of Huawei video in the user interface 10, and then the Huawei video application is started.

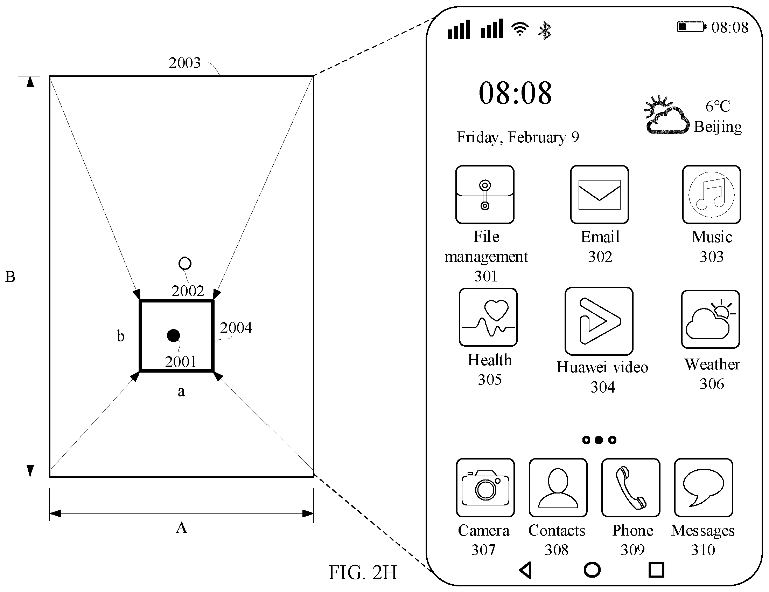

As shown in FIG. 2H, image content of the first image frame 2004 is the same as image content of the icon of the Huawei video application, a size of the first image frame 2004 is the same as a size of the icon of the Huawei video application, and a central point 2001 of the first image frame 2004 is at a same location as a central point of the icon of the Huawei video application.

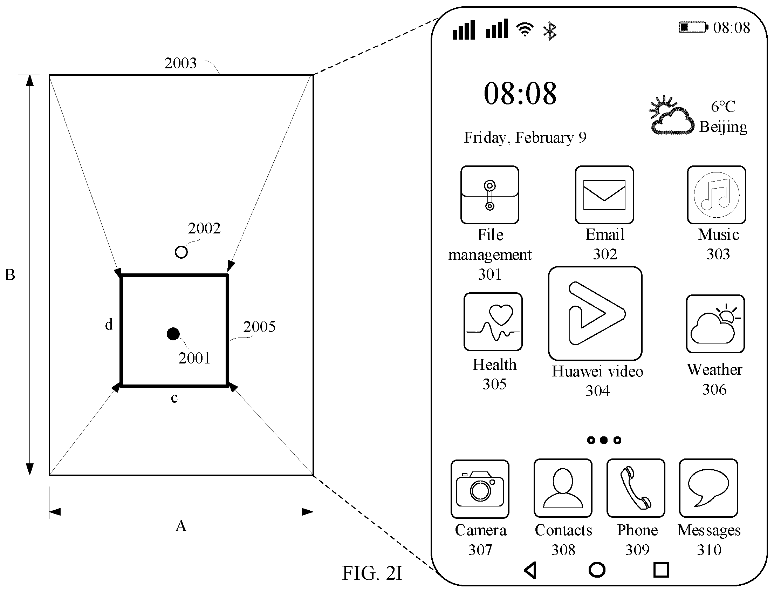

As shown in FIG. 2I, the first image frame 2004 gradually increases from a preset minimum size to a size of an image frame 2005, image content of the image frame 2005 is the same as image content of the icon of the Huawei video application, and a central point of the image frame 2005 is at a same location as a central point 2001 of the icon of the Huawei video application, and is not at a same location as a central point 2002 of the display of the electronic device 100.

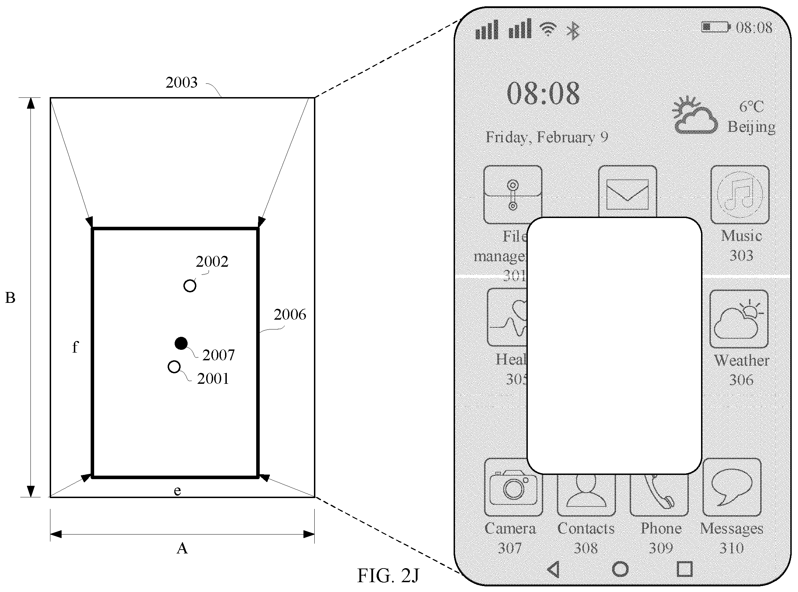

As shown in FIG. 2J, the size of the image frame 2005 gradually increases to a size of the image frame 2006, and image content of the image frame 2006 may not display any element, or may display one or more elements. This is not limited herein in this application. In addition, a central point 2007 of the image frame 2006 is no longer at a same location as a central point 2001 of the icon of the Huawei video application, and is not at a same location as a central point 2002 of the display of the electronic device 100.

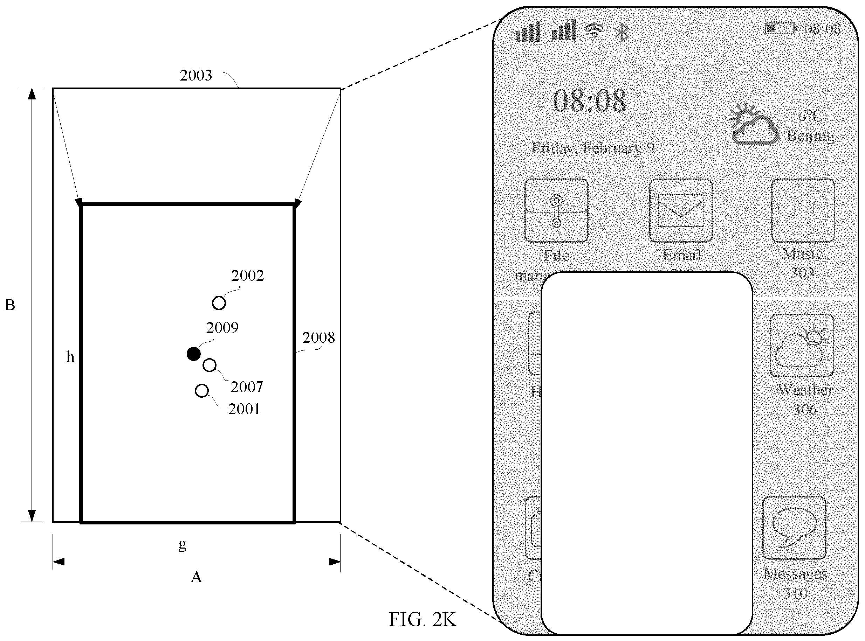

As shown in FIG. 2K, the size of the image frame 2006 gradually increases to a size of an image frame 2008, one frame (for example, a lower frame) of the image frame 2008 overlaps a frame (for example, a lower frame) of the display of the electronic device 100, and image content of the image frame 2008 may not display any element, or may display one or more elements. This is not limited herein in this application. In addition, a central point 2009 of the image frame 2008 is no longer at a same location as a central point 2001 of the icon of the Huawei video application, is not at a same location as a central point 2007 of the image frame 2006, and is not at a same location as a central point 2002 of the display of the electronic device 100.

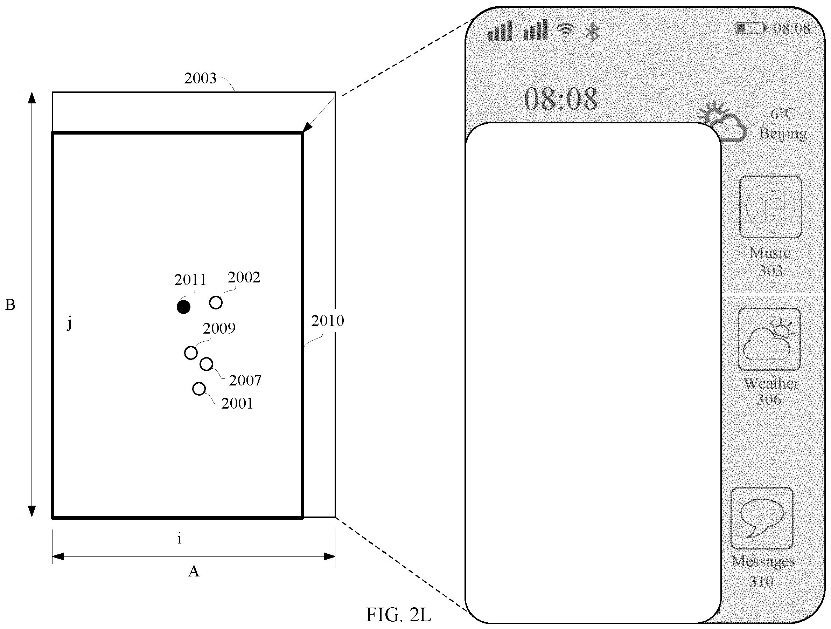

As shown in FIG. 2L, the size of the image frame 2008 gradually increases to a size of an image frame 2010, another frame (for example, a left frame) of the image frame 2010 overlaps another frame (for example, a left frame) of the display of the electronic device 100, and image content of the image frame 2008 may not display any element, or may display one or more elements. This is not limited herein in this application. In addition, a central point 2011 of the image frame 2010 is no longer at a same location as a central point 2001 of the icon of the Huawei video application, is not at a same location as a central point 2007 of the image frame 2006, is not at a same location as a central point 2009 of the image frame 2008, and is not at a same location as a central point 2002 of the display of the electronic device 100.

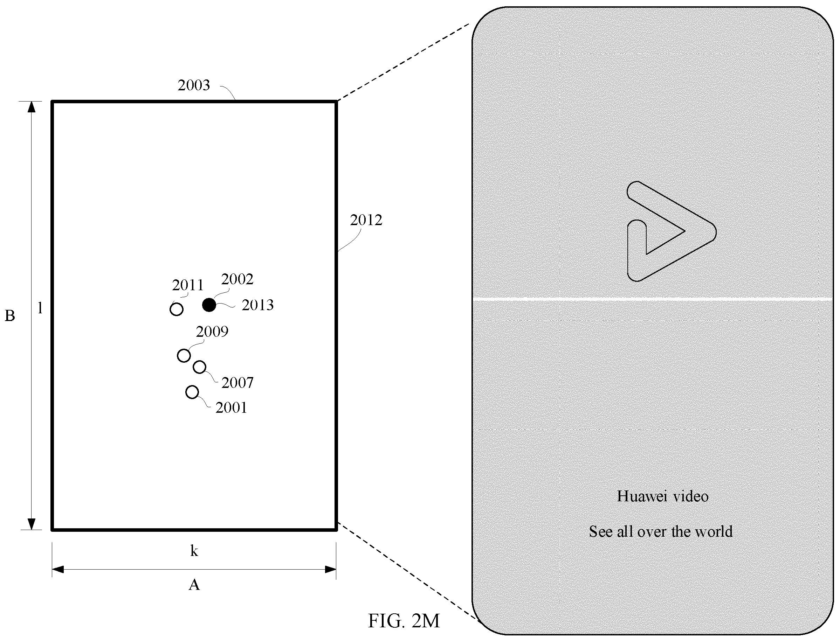

As shown in FIG. 2M, the size of the image frame 2010 gradually increases to a size of an image frame 2012, all frames of the image frame 2012 overlap all frames of the display of the electronic device 100, and image content of the image frame 2012 may not display any element, or may display one or more elements. This is not limited herein in this application. As shown in FIG. 2M, the image content of the image frame 2012 includes the icon of Huawei video and texts "Huawei video" and "See all over the world". In addition, a central point 2013 of the image frame 2012 is no longer at a same location as a central point 2001 of the icon of the Huawei video application, is not at a same location as a central point 2007 of the image frame 2006, is not at a same location as a central point 2009 of the image frame 2008, and is not at a same location as a central point 2011 of the image frame 2010, but is at a same location as a central point 2002 of the display of the electronic device 100.

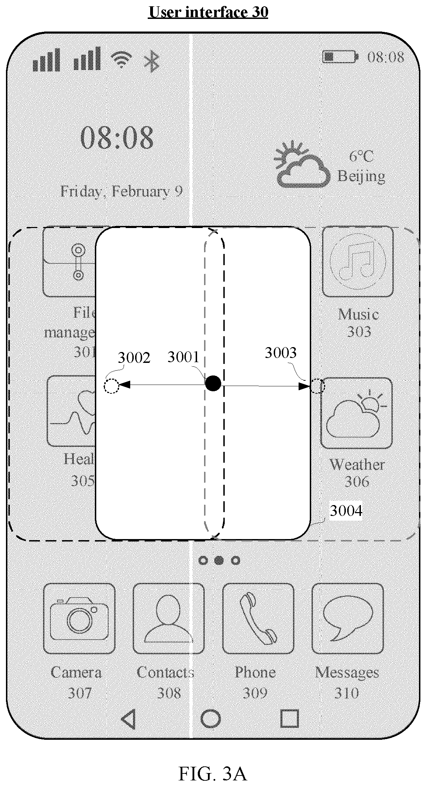

As shown in FIG. 3A to FIG. 3E, in some embodiments, in a start animation, a size of each image frame is fixed, and a central point of each image frame moves along a preset track. A shape of each image frame may be circular or rectangular. This is not limited herein in this application.

The electronic device 100 receives and responds to an operation of tapping an icon of an application by a user, where a size of the icon of the application gradually increases. After the size of the icon of the application increases to a preset size, the size of the icon of the application no longer changes, and a user interface of the electronic device 100 displays an image frame in a floating manner, where the image frame may move along a preset track. Specifically, for a diagram of a UI in which an icon of an application changes, refer to the embodiment shown in FIG. 1G to FIG. 1I. Details are not described herein again in this application. For a diagram of a UI in which an image frame moves along a preset track, refer to the following embodiment in FIG. 3A to FIG. 3E.

For example, as shown in FIG. 3A, a central point 3001 of an image frame 3004 may move left and right in a straight line track between a location 3002 and a location 3003. When the central point 3001 of the image frame 3004 is at the location 3002, a left frame of the image frame 3004 may overlap a left frame of a display of the electronic device 100. When the central point 3001 of the image frame 3004 is at the location 3003, a right frame of the image frame 3004 may overlap a right frame of the display of the electronic device 100. Image content of the image frame 3004 may include one or more elements, or may not include any element. This is not limited herein in this application.

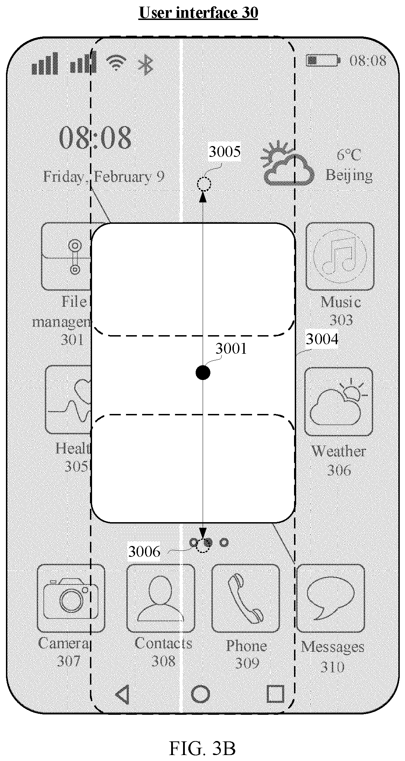

For example, as shown in FIG. 3B, the central point 3001 of the image frame 3004 may move up and down in a straight line track between a location 3005 and a location 3006. When the central point 3001 of the image frame 3004 is at the location 3005, an upper frame of the image frame 3004 may overlap an upper frame of the display of the electronic device 100. When the central point 3001 of the image frame 3004 is at the location 3006, a lower frame of the image frame 3004 may overlap a lower frame of the display of the electronic device 100. Image content of the image frame 3004 may include one or more elements, or may not include any element. This is not limited herein in this application.

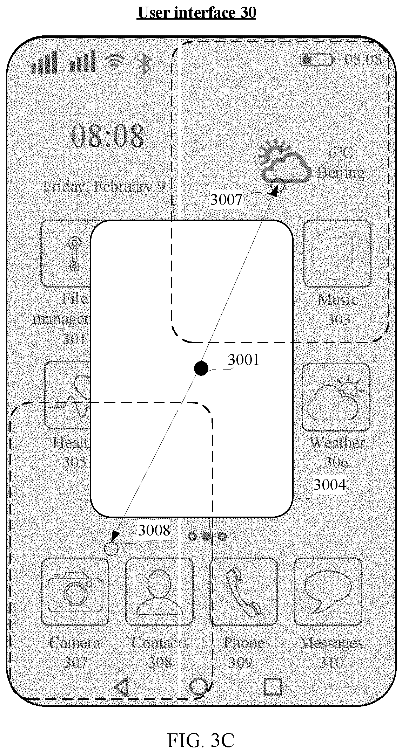

For example, as shown in FIG. 3C, the central point 3001 of the image frame 3004 may move right upward and left downward in a straight line track between a location 3007 and a location 3008. When the central point 3001 of the image frame 3004 is at the location 3007, an upper frame of the image frame 3004 may overlap an upper frame of the display of the electronic device 100, and a right frame of the image frame 3004 may overlap a right frame of the display of the electronic device 100. When the central point 3001 of the image frame 3004 is at the location 3008, a lower frame of the image frame 3004 may overlap a lower frame of the display of the electronic device 100, and a left frame of the image frame 3004 may overlap a left frame of the display of the electronic device 100. Image content of the image frame 3004 may include one or more elements, or may not include any element. This is not limited herein in this application.

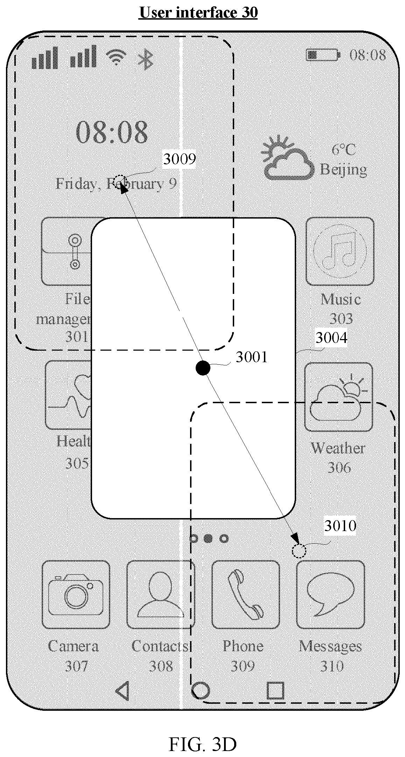

For example, as shown in FIG. 3D, the central point 3001 of the image frame 3004 may move left upward and right downward in a straight line track between a location 3009 and a location 3010. When the central point 3001 of the image frame 3004 is at the location 3009, an upper frame of the image frame 3004 may overlap an upper frame of the display of the electronic device 100, and a left frame of the image frame 3004 may overlap a left frame of the display of the electronic device 100. When the central point 3001 of the image frame 3004 is at the location 3010, a lower frame of the image frame 3004 may overlap a lower frame of the display of the electronic device 100, and a right frame of the image frame 3004 may overlap a right frame of the display of the electronic device 100. Image content of the image frame 3004 may include one or more elements, or may not include any element. This is not limited herein in this application.

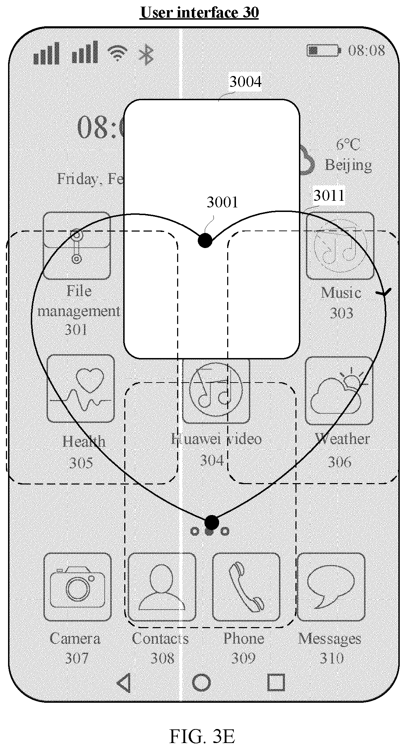

As shown in FIG. 3E, a motion track 3011 of the central point 3001 of the image frame 3004 may be a heart-shaped graph, where the image frame 3004 may move clockwise or counterclockwise on the motion track 3011.

It should be noted that the motion track of the central point 3001 of the image frame 3004 in the electronic device 100 is not limited to the foregoing graph, and other graphs such as a circle, a horizontal "8" curve graph, a Bessel curve graph, and an arc curve graph may be included. This is not limited herein in this application.

(2) Exit animation

A phase that is after the electronic device 100 receives an operation of starting an application by a user and that is from a time at which the electronic device 100 receives an operation of exiting the application by the user to a time at which the electronic device 100 displays a home screen is referred to as an exit phase of the application, and a time consumed in the exit phase is referred to as an exit time. Because the exit time of the application is long, to bring better user experience to the user, the electronic device 100 plays a segment of exit animation in the exit phase of the application. The exit animation may mean that N image frames are displayed in the user interface of the electronic device 100 in a floating manner in a preset sequence based on a preset window size, a preset display time, a preset display location, preset transparency, a preset display element, and the like.

In some embodiments, when a main interface of the application is displayed, the electronic device 100 receives the operation of exiting the application by the user. In this case, in the exit animation, a size of each image frame gradually decreases from a preset maximum size to a preset minimum size. The preset maximum size may be the same as a size of the display of the electronic device 100, and the preset minimum size may be the same as a size of an icon of the application.

Specifically, in a possible implementation, in an exit animation, image frames may be sequentially displayed in a sequence of FIG. 1L, FIG. 1K, FIG. 1J, FIG. 1I, and FIG. 1H.

In another possible implementation, in an exit animation, image frames may be sequentially displayed in a sequence of FIG. 2M, FIG. 2L, FIG. 2K, FIG. 2J, FIG. 2I, and FIG. 2H.

In the exit animation, the image frames may be sequentially displayed according to another rule. This is not limited herein in this application.

In some other embodiments, when the application is started, before the main interface of the application is displayed, the electronic device 100 receives the operation of exiting the application by the user. Assuming that the start animation of the application includes M image frames, the exit animation also includes M image frames. When the start animation is played to an $N^{th}$ frame, N is less than M. In this case, the electronic device 100 plays the exit animation in the following two implementations:

Manner 1:

When the start animation is played to the $N^{th}$ frame, N is less than M, and the electronic device 100 receives an operation of exiting the application by the user. In this case, the electronic device 100 starts the exit animation, and stops playing an image frame in the start animation, and the electronic device 100 starts to play an $M^{th}$ frame in the exit animation, until the electronic device 100 plays a $1^{st}$ image frame in the exit animation.

It should be noted that the start animation includes M image frames, and a play sequence of the start animation is a $1^{st}$ image frame, a $2^{nd}$ image frame, ..., an $N^{th}$ image frame, ..., and an $M^{th}$ image frame.

The exit animation includes M image frames, and a play sequence of the exit animation is an $M^{th}$ image frame, an $(M-1)^{th}$ image frame, ..., an $N^{th}$ image frame, ..., and a $1^{st}$ image frame.

For example, if a start animation of an application includes 30 image frames, an exit animation also includes 30 image frames. After the application is started, the start animation of the application is played to an $8^{th}$ frame, where image frames that have been played by the electronic device 100 are a $1^{st}$ image frame to an $8^{th}$ image frame, and the $1^{st}$ image frame to the $8^{th}$ image frame may be diagrams of UIs shown in FIG. 1H to FIG. 1K. It may be understood that some of the accompanying drawings are omitted from FIG. 1H to FIG. 1K.

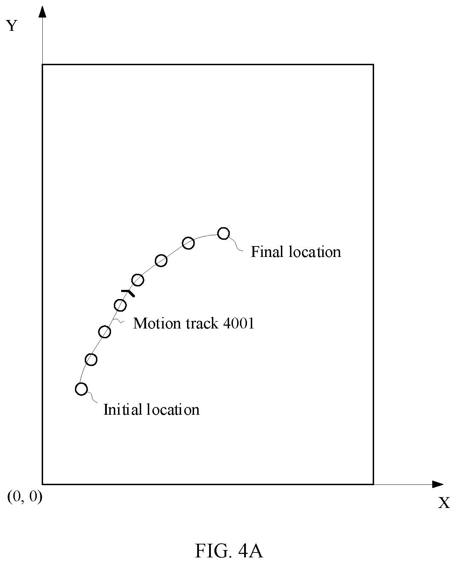

For example, FIG. 4A shows an example of a schematic diagram of a motion track of central points of all image frames that are played from a $1^{st}$ frame to an $8^{th}$ frame in a start animation.

When the start animation is played to the $8^{th}$ frame, the electronic device 100 receives an operation of exiting the application by the user. In this case, the electronic device 100 starts an exit animation, and the electronic device 100 starts to play an $8^{th}$ image frame in the exit animation until the electronic device 100 plays a $1^{st}$ image frame in the exit animation. The $8^{th}$ image frame to the $1^{st}$ image frame may be diagrams of UIs shown in FIG. 1K to FIG. 1H. It may be understood that some of the accompanying drawings are omitted from FIG. 1K to FIG. 1H.

It should be noted that image information of each image frame in the exit animation may be the same as or different from image information of each image frame in the start animation. This is not limited herein in this application. The image information includes but is not limited to a size of the image frame, a display element of the image frame, transparency of the image frame, a display time of the image frame, rounded corner information of the image frame, or the like.

As shown in FIG. 4A, a right direction of a lower frame of a page display area of the electronic device 100 is used as a positive direction of an X-axis, an upward direction of a left frame of the page display area of the electronic device 100 is used as a positive direction of a Y-axis, and an intersection of the X-axis and the Y-axis is used as an origin to establish a rectangular coordinate system.

First, an initial location is a central point of a $1^{st}$ image frame in the start animation, and the central point of the $1^{st}$ image frame is an initial location of a motion track of a central point of each image frame in the start animation. Then, central points of all image frames in the start animation sequentially move along a direction of a motion track 4001. When a central point of an $8^{th}$ image frame in the start animation moves to a final location of the motion track, the electronic device 100 receives an operation of exiting the application by the user, and then the electronic device 100 executes the exit animation.

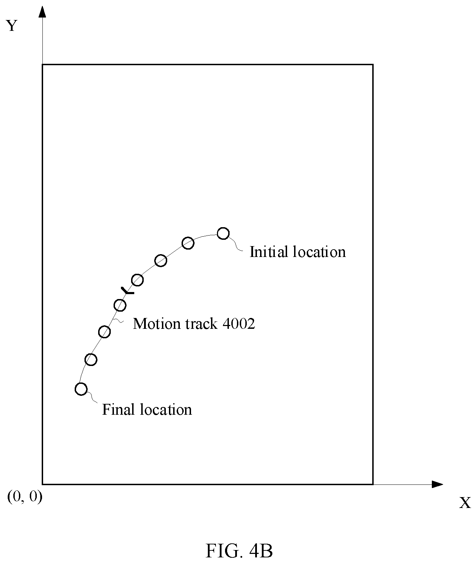

As shown in FIG. 4B, an initial location is a central point of an $8^{th}$ image frame in the start animation, and the electronic device 100 starts an exit animation, and sequentially plays an $8^{th}$ image frame to a $1^{st}$ image frame in the exit animation. It may be understood that a central point of the $8^{th}$ image frame in the exit animation overlaps a central point of the $8^{th}$ image frame in the start animation. The central point of the $8^{th}$ image frame in the exit animation is an initial location of the motion track of the central points of all the image frames in the exit animation. Then, the central points of all the image frames in the exit animation sequentially move along a direction of a motion track 4002. When a central point of a $1^{st}$ image frame in the start animation moves to a final location of the motion track, the electronic device 100 exits the application and displays a main interface.

It should be noted that the motion track 4001 may be the same as or different from the motion track 4002. This is not limited herein in this application.

Manner 2:

When the start animation is played to an $N^{th}$ frame, N is less than M, and the electronic device 100 receives an operation of exiting the application by the user. In this case, the electronic device 100 starts an exit animation, but the electronic device 100 does not stop playing an image frame in the start animation, and the electronic device 100 separately superimposes an $(N+1)^{th}$ image frame to an $M^{th}$ image frame in the start animation and a $1^{st}$ image frame to an $(M-N)^{th}$ image frame in the exit animation, to obtain new M-N image frames. The electronic device 100 plays the new M-N image frames and an $(M-N+1)^{th}$ image frame to an $M^{th}$ image frame in the exit animation.

For example, if a start animation of an application includes 30 image frames, an exit animation also includes 30 image frames. After the application is started, the start animation of the application is played to an $8^{th}$

frame, where image frames that have been played by the electronic device 100 are a $1^{st}$ image frame to an $8^{th}$ image frame, and the $1^{st}$ image frame to the $8^{th}$ image frame may be diagrams of UIs shown in FIG. 1H to FIG. 1K. It may be understood that some of the accompanying drawings are omitted from FIG. 1H to FIG. 1K.

Then, the electronic device 100 separately performs a superposition operation on a $9^{th}$ image frame to a $30^{th}$ image frame in the start animation and a $1^{st}$ image frame and a $22^{nd}$ image frame in the exit animation, to obtain new 21 image frames. The electronic device 100 sequentially plays the new 21 image frames and a $23^{rd}$ image frame to a $30^{th}$ image frame in the exit animation.

2. Animation calculation

The animation calculation includes start animation calculation and exit animation calculation.

When playing the start animation, the electronic device 100 needs to calculate parameter information such as a window size, a display time, a display location, transparency, and a display element of each image frame in the start animation, and compose the image frame based on the parameter information of each image frame. Herein, information such as the window size, the display time, the display location, the transparency, and the display element of each image frame in the start animation is referred to as parameter information of the image frame. The parameter information of the image frame may further include more other information. This is not limited herein in this application.

In addition, when playing the exit animation, the electronic device 100 also needs to calculate information such as a window size, a display time, a display location, transparency, and a display element of each image frame in the exit animation, and compose the image frame based on the parameter information of each image frame.

It may be understood that a window size of each image frame is values of a length and a width of the image frame. A display time of each image frame is a time at which the image frame is displayed in a user interface of the electronic device 100 in a floating manner. A display location of each image frame is location coordinates of a central point of the image frame on a display of the electronic device 100. Transparency of each image frame is a depth of a color of the image frame, where a deeper color of the image frame indicates smaller transparency of the image frame. A display element of each image frame is text information, image information, and/or the like displayed in the image frame.

3. UI thread: An Android program has only one process by default, but one process may have a plurality of threads. One of the threads is a UI thread, and the UI thread is also referred to as a UI main thread. The UI thread is created when a program runs, and is mainly responsible for controlling display, update, and control interaction of a UI. All application components, including an activity, a service, and a broadcast receiver, run in a main thread of the application. Therefore, time-consuming operation processing in any component may block all other components, including a service and a visible activity.

4. A surfaceflinger module (surface flinger, SF): The surfaceflinger module is to receive graphical display data from a plurality of sources, compose the data, and then send composed data to a display device for display. For example, when an application is opened, three layers of display are commonly used: a status bar on the top, a navigation bar on the bottom or the side, and an interface of the application. Each layer is separately updated and rendered. These interfaces are composed by the surfaceflinger module into a frame buffer (Frame Buffer). A display of the electronic device may read data from the frame buffer, and display a page corresponding to the data. In a display process, a buffer queue (buffer queue) is used, and the surfaceflinger module is used as a composer, for example, a window-managed layer is used as a page generated by a producer through a GPU, and is composed by the surfaceflinger module.

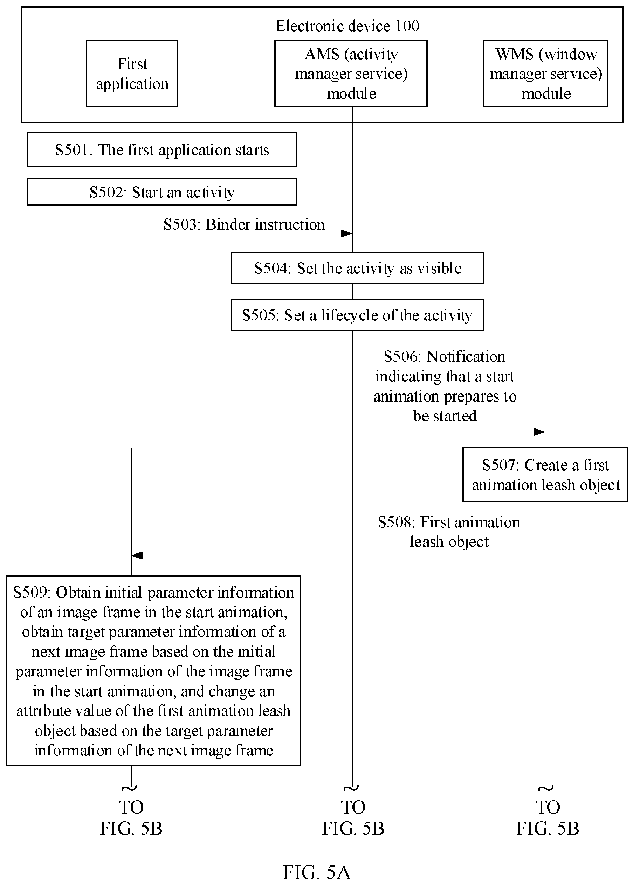

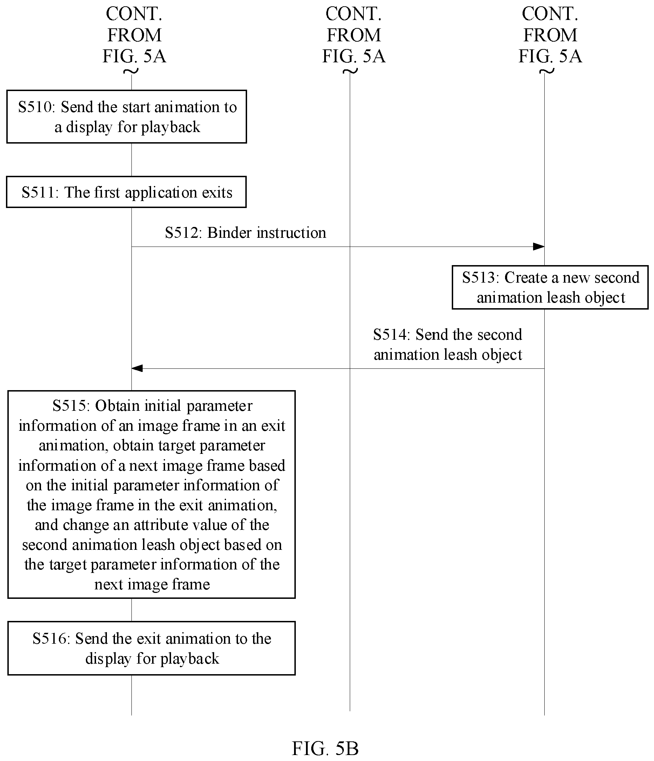

FIG. 5A and FIG. 5B show an example of a schematic diagram of playing a start animation and playing an exit animation by an electronic device 100.

The flowchart shown in FIG. 5A and FIG. 5B includes a first application, an AMS (activity manager service) module, and a WMS (window manager service) module.

The AMS is used for management services of all activity lifecycles in the electronic device 100.

The WMS is used to manage a display sequence, sizes, locations, window animation, and the like of windows.

First, the electronic device 100 receives an operation of starting the first application by a user, and in response to the operation of starting the first application by the user, the electronic device 100 creates a first animation leash object by using the AMS module and the WMS module. Then, the WMS module sends an identifier of the first animation leash object to the first application, and after the first application receives the identifier of the first animation leash object, the first application starts to perform a start animation.

Specifically, in S501 to S507, a procedure of a method in which the AMS module and the WMS module create the first animation leash object is described. It should be noted that the procedure of the method in which the AMS module and the WMS module create the first animation leash object may include more or fewer steps than S501 to S507. This is not limited herein in this application. In addition, there is no specific limitation of an execution sequence of steps S501 to S507 in this application.

S501: The first application starts.

The electronic device 100 receives an operation of starting the first application by the user, and then the first application is started.

For example, the first application may be a Huawei video application. The operation of starting the first application may be an operation of tapping an icon of the Huawei video application shown in FIG. 1G.

S502. The first application starts an activity.

The activity is a core main component in the first application. After the electronic device 100 receives the operation of starting the first application by the user, the first application starts, and the first application starts the activity.

S503: The first application sends a binder instruction to an AMS (activity manager service, AMS) module.

The AMS module is responsible for a management service of an activity lifecycle.

The AMS module is located at an application framework layer of the first application. At the application framework layer, the AMS is a very important interface, and is not only responsible for starting an activity and a service, but also responsible for managing the activity and the service.

After the first application starts the activity, inter-process communication is entered into an AMS process of a system by using the binder instruction, and an AMS.start activity interface is invoked.

S504: The AMS module sets the activity as visible.

S505. The AMS module sets a lifecycle of the activity.

S506: The AMS module sends, to a window manager service (window manager service, WMS) module, a notification indicating that a start animation prepares to be started.

S507: The WMS module creates a first animation leash object.

Specifically, the WMS module invokes an apply animation locked function to prepare to start animation. The WMS module obtains a task object of a parent node corresponding to an app window token, and performs animation by using a surface animator of a task. The app window token corresponds to one activity, that is, an actual object of the activity in the system, and is used by the AMS module and the WMS module to operate the activity. The surface animator is responsible for animating a window and managing a lifecycle of the window animation.

The WMS module creates the first animation leash object by using the surface animator. The first animation leash object is a temporary object created by the surface animator, and may control which windows need to be moved, and the first application may control, by using the first animation leash object, parameter information of each image frame in the start animation.

After the first application receives an identifier of the first animation leash object, the first application starts to perform the start animation. After the first application determines the parameter information of each image frame in the start animation, the first application changes, based on the parameter information of each image frame in the start animation, an attribute of a window drawn by the first animation leash object. The first application sends the parameter information of each image frame in the start animation to an SF module, the SF module composes an image frame, and then the SF module displays the composed image frame in the window drawn by the first animation leash object.

Specifically, in S508 to S510, a procedure of a method in which the first application plays the start animation is described. It should be noted that the procedure of the method in which the first application plays the start animation may include more or fewer steps than S508 to S510. This is not limited herein in this application. In addition, there is no specific limitation of an execution sequence of steps S508 to S510 in this application.

S508: The WMS module sends the first animation leash object to the first application.

S509: The first application obtains initial parameter information of the image frame in the start animation, obtains target parameter information of a next image frame based on the initial parameter information of the image frame in the start animation, and changes an attribute value of the first animation leash object based on the target parameter information of the next image frame.

That is, the first application obtains the initial parameter information of the image frame in the start animation, and obtains the target parameter information of the next image frame through calculation based on the initial parameter information of the image frame in the start animation. The first animation leash object draws a first window, and the first application changes, based on the target parameter information of the next image frame, an attribute value of the first window drawn by the first animation leash object. The attribute value of the first window drawn by the first animation leash object is the same as the target parameter information of the next image frame. For example, if the target parameter information of the next image frame includes information such as a window size, a display time, a display location, transparency, and a display element of the next image frame, the attribute value of the first window drawn by the first animation leash object also includes information such as a window size, a display time, a display location, transparency, and a display element.

It may be understood that the first window drawn by the first animation leash object may be a window displayed in a user interface of the electronic device 100 in a floating manner. Then, the surfaceflinger module sets an attribute of the "window" based on the initial parameter information of the image frame in the start animation, so that the window can display an image based on a display sequence and display statuses of preset image frames in the start animation.

S510: The first application sends the start animation to the display for playback.

For how the electronic device 100 plays the start animation, refer to the embodiments shown in FIG. 1A to FIG. 1L, FIG. 2A to FIG. 2M, and FIG. 3A to FIG. 3E. Details are not described herein again in this application.

The electronic device 100 receives an operation of exiting the first application by the user. The electronic device 100 may receive, in a process of playing the start animation, the operation of exiting the first application by the user, or may receive, after playing the start animation, the operation of exiting the first application by the user. This is not limited herein in this application. In response to the operation of exiting the first application by the user, the electronic device 100 creates a second animation leash object by using the AMS module and the WMS module. Then, the WMS module sends an identifier of the second animation leash object to the first application, and after the first application receives the identifier of the second animation leash object, the first application starts to perform an exit animation.

Specifically, in S511 to S513, a procedure of a method in which the AMS module and the WMS module create the second animation leash object is described. It should be noted that the procedure of the method in which the AMS module and the WMS module create the second animation leash object may include more or fewer steps than S511 to S513. This is not limited herein in this application. In addition, there is no specific limitation of an execution sequence of steps S511 to S513 in this application.

S511: The first application exits.

After the first application is started, the electronic device 100 starts to play the start animation. In this case, the electronic device 100 may receive and respond to the operation of exiting the first application by the user, and then the first application exits.

When the first application exits, the electronic device 100 plays an exit animation.

S512: The first application sends a binder instruction to the WMS module.

When the first application exits, the first application sends the binder instruction to the WMS module, where the binder instruction instructs the WMS module to start to perform the exit animation.

S513: The WMS module receives and responds to the binder instruction to create the second animation leash object.

Similarly, the WMS module creates the second animation leash object by using the surface animator. The second animation leash object is a temporary object created by the surface animator, and may control which windows need to be moved, and the first application may control, by using the second animation leash object, parameter information of each image frame in the exit animation.

After the first application receives an identifier of the second animation leash object, the first application starts to perform the exit animation. After the first application determines the parameter information of each image frame in the exit animation, the first application changes, based on the parameter information of each image frame in the exit animation, an attribute of a window drawn by the second animation leash object. The first application sends the parameter information of each image frame in the exit animation to an SF module, the SF module composes an image frame, and then the SF module displays the composed image frame in the window drawn by the second animation leash object.

Specifically, in S514 to S516, a procedure of a method in which the first application plays the exit animation is described. It should be noted that the procedure of the method in which the first application plays the exit animation may include more or fewer steps than S514 to S516. This is not limited herein in this application. In addition, there is no specific limitation of an execution sequence of steps S514 to S516 in this application.

S514. The WMS module sends the second animation leash object to the first application.

S515: The first application receives the second animation leash object sent by the WMS module, obtains initial parameter information of the image frame in the exit animation, obtains target parameter information of a next image frame based on the initial parameter information of the image frame in the exit animation, and changes an attribute value of the second animation leash object based on the target parameter information of the next image frame.

The first application receives the second animation leash object sent by the WMS module, and then the first application starts to perform the exit animation. Before the first application starts to perform the exit animation, the first application needs to obtain the initial parameter information of the image frame in the exit animation.

It may be understood that exit animations of different applications may be different, that is, initial parameter information of image frames in the different applications is also different.

The first application obtains the initial parameter information of the image frame in the exit animation, and obtains the target parameter information of the next image frame through calculation based on the initial parameter information of the image frame in the exit animation. The second animation leash object draws a second window, and the first application changes, based on the target parameter information of the next image frame, an attribute value of the second window drawn by the second animation leash object. The attribute value of the second window drawn by the second animation leash object is the same as the target parameter information of the next image frame. For example, if the target parameter information of the next image frame includes information such as a window size, a display time, a display location, transparency, and a display element of the next image frame, the attribute value of the second window drawn by the second animation leash object also includes information such as a window size, a display time, a display location, transparency, and a display element.

It may be understood that the second window drawn by the second animation leash object may be a window displayed in a user interface of the electronic device 100 in a floating manner. Then, the surfaceflinger module sets an attribute of the "window" based on the initial parameter information of the image frame in the start animation, so that the window can display an image based on a display sequence and display statuses of preset image frames in the start animation.

S516: The surfaceflinger module sends the exit animation to the display for playback.

How the electronic device 100 plays the exit animation is explained in the foregoing technical term explanation. For details, refer to the foregoing embodiments. The details are not described herein again in this application.

It can be learned from the foregoing analysis that the start animation or the exit animation may include N image frames. It can be learned from the analysis in FIG. 5A and FIG. 5B that animation calculation (for example, image frame processing) in the start animation or the exit animation is completed in an application (UI thread of the application).

However, in addition to the animation calculation, a to-be-processed task item in a message queue processed in a UI thread of the application further includes another task item, for example, a screen touch event or an interface layout. If the animation calculation cannot be processed in time in the UI thread because a time for processing the another task item is long, some image frames that cannot be processed in time in the start animation or the exit animation are lost, and consequently frame freezing occurs in the start animation or the exit animation played by the electronic device 100.

For ease of understanding, the following describes a mechanism for processing the animation calculation involved in the start animation or the exit animation in the UI thread of the application.

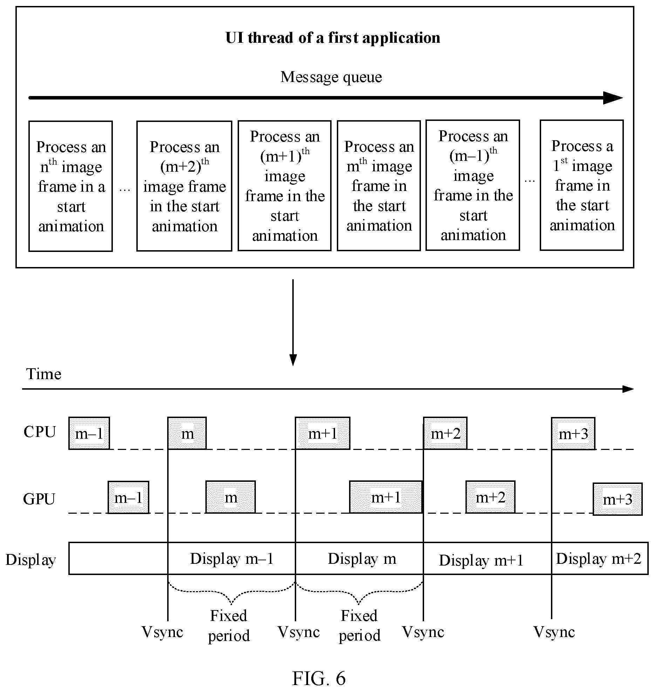

FIG. 6 shows an example of a working principle diagram of processing animation calculation in a UI thread of a first application.

To-be-processed task items in a message queue of the UI thread include only animation calculation, such as processing a 1st image frame in the start animation, ..., processing an (m-1)th image frame in the start animation, processing an mth image frame in the start animation, processing an (m+1)th image frame in the start animation, processing an (m+2)th image frame in the start animation, ..., and processing an nth image frame in the start animation. UI threads are sequentially executed in a sequence of the task items in the message queue.

It may be understood that, when the UI thread processes an (m-1)th image frame, the UI thread invokes the CPU to draw the (m-1)th image frame. After the CPU draws the (m-1)th image frame, the UI thread invokes the GPU to render the (m-1)th image frame drawn by the CPU. After the GPU completes rendering of the (m-1)th

image frame drawn by the CPU, the UI thread sends the (m-1)th image frame to the display for display.

As shown in FIG. 6, when the UI thread displays the (m-1)th image frame, and the UI thread is about to process an mt11 image frame, the UI thread sends a Vsync signal, and the UI thread needs to invoke the CPU and the GPU to complete drawing and rendering of the mth image frame in a fixed period (for example, 11.1 ms). After the UI thread sends the Vsync signal, the UI thread starts to invoke the CPU to draw the mth image frame. After the CPU draws the mth image frame, the UI thread invokes the GPU to render the mth image frame drawn by the CPU. If the UI thread completes drawing and rendering of the mth image frame in a fixed period, the UI thread sends the mth image frame to the display for display.

By analogy, when processing each image frame subsequently, the UI thread sends a Vsync signal, and if the UI thread completes processing of the image frame in a fixed period, the UIthread sends the image frame to the display for display. It may be understood that only after the UI thread sends the Vsync signal, the UI thread invokes the CPU to draw a next image frame.

It should be noted that if the UI thread can complete drawing and rendering of a specified image frame in a fixed period by invoking the CPU/GPU, the specified image frame may be displayed on the display. A "frame loss" occurs if the UI thread cannot complete drawing and rendering of a specified image frame in a fixed period by invoking the CPU/GPU.

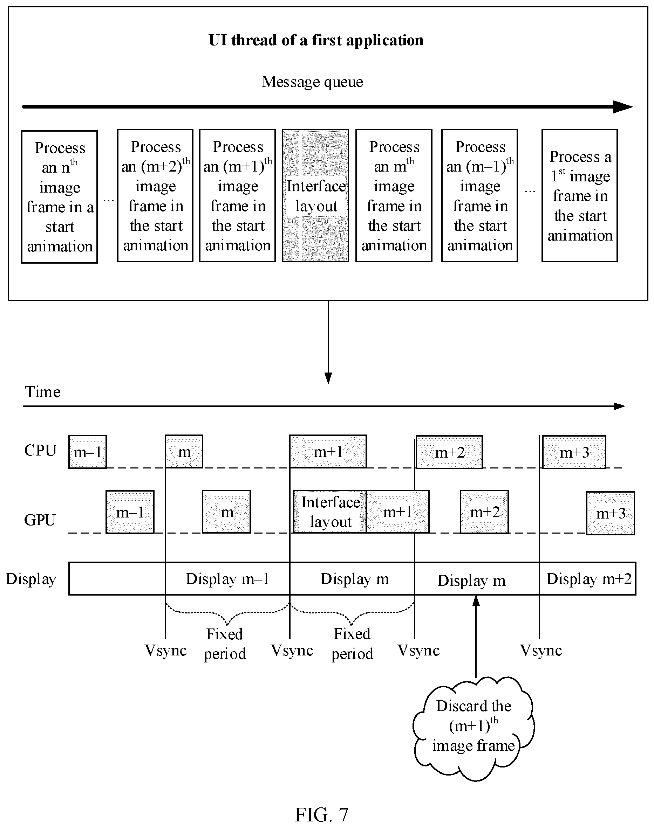

For example, FIG. 7 shows an example of a schematic diagram of a frame loss caused by processing an image frame in a UI thread.

As shown in FIG. 7, in addition to animation calculation, to-be-processed task items in a message queue of the UI thread further includes a task item of a screen touch event. Processing items of the task items in the UI thread include: processing a 1st image frame in the start animation, ..., processing an (m-1)th image frame in the start animation, processing an mth image frame in the start animation, an interface layout, processing an (m+1)th image frame in the start animation, processing an (m+2)th image frame in the start animation, ..., processing an nth image frame in the start animation, and the like. UI threads are sequentially executed in a sequence of the task items in the message queue.

A method for drawing, rendering, and displaying the image frame by the UI thread shown in FIG. 7 is the same as that described in FIG. 6. Details are not described again in this application.

A difference lies in that, as shown in FIG. 7, when the display displays the mth image frame, the UI thread sends a Vsync signal, and the UI thread needs to invoke the CPU and the GPU to complete drawing and rendering of the (m+1)th image frame in a fixed period (for example, 11.1 ms). However, in the message queue of the UI thread, a time of the screen touch event is earlier than a time of processing the (m+1)th image frame in the start animation. Therefore, in a fixed period, the UI thread needs to first process the interface layout task item, and then process the task item of drawing and rendering (m+1)$^{th}$ image frames. If the UI thread completes processing of the interface layout task item in a fixed period, but after a time of the fixed period arrives, the task item in which the UI thread invokes the CPU/GPU to draw/render the (m+1)$^{th}$ image frame is not completed. To prevent processing of another task item in a next fixed period of the Vsync signal from being affected, the UI thread discards the (m+1)$^{th}$ image frame. The UI thread sends a Vsync signal, and performs processing of a task item in a next fixed period. In the new fixed period, because drawing and rendering of the (m+1)$^{th}$ image frame are not completed, the UI thread obtains an m$^{th}$ image frame instead of the (m+1)$^{th}$ image frame. Therefore, a phenomenon that the m$^{th}$ image frame is still displayed in the next fixed period of the Vsync signal is referred to as a "frame loss". If the display continuously displays a same image frame in a plurality of periods, a user feels that frame freezing occurs in the interface displayed on the electronic device 100, which seriously affects user experience.

Therefore, this application provides an animation calculation method. The method includes: creating a new animation processing thread on a surfaceflinger module on a system service side. The electronic device 100 decouples animation calculation processed by UI threads of all applications to the animation processing thread on the surfaceflinger module side, and the animation processing thread on the surfaceflinger module side processes all animation calculation processed by the UI threads of all the applications. In this way, a problem that an image frame is discarded because the UI thread of the application does not complete drawing and rendering of the image frame in a fixed period can be avoided.

According to the invention, when performing animation calculation, the animation processing thread on the surfaceflinger module side obtains, by using an interpolation algorithm, parameter information of a next image frame based on parameter information of a currently displayed image frame in a start animation or an exit animation, compose the next image frame based on the parameter information of the next image frame, and sends the next image frame to a display for display. In this way, the animation processing thread on the surfaceflinger module side obtains the parameter information of the next image frame by using the interpolation algorithm, so that an animation (that is, image switching) displayed on the electronic device 100 can be smoother.

How the animation processing thread on the surfaceflinger module side obtains the parameter information of the next image frame according to the interpolation algorithm is described in detail in the following embodiments. For details, refer to descriptions in the following embodiments.

The following describes a hardware architecture of an electronic device 100 in embodiments of this application.

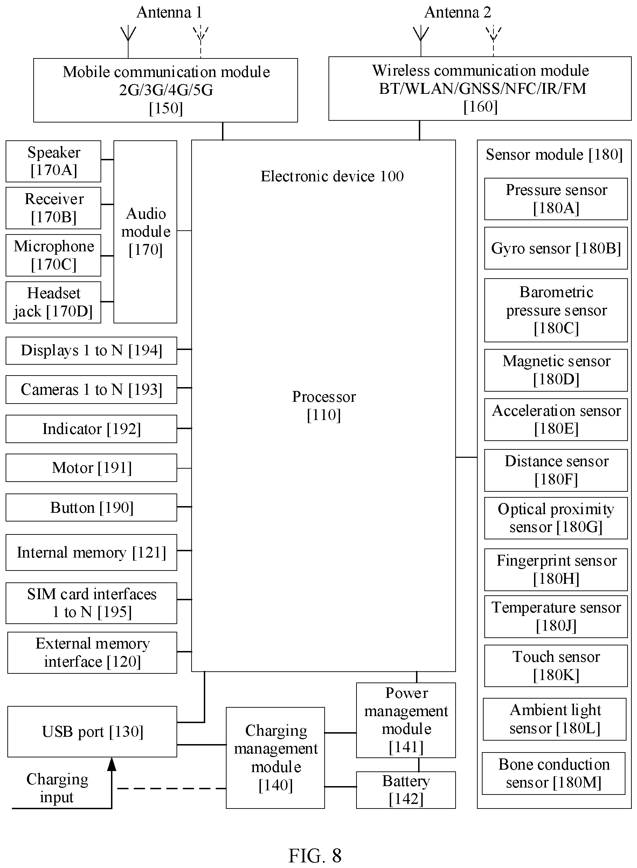

FIG. 8 is a schematic diagram of a structure of an electronic device 100.

The following specifically describes this embodiment by using the electronic device 100 as an example. A device type of the electronic device 100 may include a mobile phone, a tablet computer, a smart screen, a desktop computer, a laptop computer, a handheld computer, a notebook computer, an ultra-mobile personal computer (ultra-mobile personal computer, UMPC), a netbook, and the like. The device type of the electronic device 100 is not specially limited in embodiments of this application.

It should be understood that the electronic device 100 shown in FIG. 8 is merely an example, and the electronic device 100 may have more or fewer components than those shown in FIG. 8, may combine two or more components, or may have different component configurations. The various components shown in the figure may be implemented in hardware, software, or a combination of hardware and software including one or more signal processing and/or application-specific integrated circuits.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device 100. In some other embodiments of this application, the electronic device 100 may include more or fewer components than those shown in the figure, or may combine some components, or may split some components, or may have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

In some embodiments, the processor 110 may include a softAP network configuration module. The soft-AP network configuration module may be integrated into an AP, an NPU, or another chip. When determining that NAN network configuration fails, the electronic device 100 may wake up the softAP network configuration module, and perform network configuration for the electronic device 100 by using a softAP network configuration method. In some other embodiments, the processor 110 may include a Bluetooth network configuration module, a sound wave network configuration module, and the like. A chip integrating the foregoing different types of network configuration modules is not limited in this embodiment of this application. The foregoing different types of network configuration modules may be waked up after the electronic device 100 determines that NAN network configuration fails. The electronic device 100 may provide a corresponding network configuration service for the electronic device 100 by using the foregoing different types of network configuration modules.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB port 130 is a port that conforms to a USB standard specification, and may be specifically a mini USB port, a micro USB port, a USB Type-C port, or the like. The USB port 130 may be configured to be connected to the charger to charge the electronic device 100, or may be configured to transmit data between the electronic device 100 and a peripheral device, or may be configured to be connected to a headset, to play audio through the headset. The port may be further configured to be connected to another electronic device, for example, an AR device.

The charging management module 140 is configured to receive a charging input from the charger.

The power management module 141 is configured to be connected to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further multiplexed, to improve antenna utilization.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and execute program instructions to generate or change display information.

The display 194 is configured to display an image, a video, and the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. In some embodiments, the ISP may be disposed in the camera 193.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to: compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. The NPU may be used to implement applications such as intelligent cognition of the electronic device 100, for example, image recognition, facial recognition, voice recognition, and text understanding.

The external memory interface 120 may be configured to be connected to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to execute various function applications and data processing of the electronic device 100.

The electronic device 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to: encode and decode an audio signal.

The speaker 170A, also referred to as a "horn", is configured to convert an electrical audio signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to be connected to a wired headset.

The pressure sensor 180A is configured to sense a pressure signal, and may convert the pressure signal into an electrical signal.

The gyro sensor 180B may be configured to determine a moving posture of the electronic device 100. In some embodiments, an angular velocity of the electronic device 100 around three axes (that is, axes x, y, and z) may be determined through the gyro sensor 180B.

The barometric pressure sensor 180C is configured to measure barometric pressure.

The magnetic sensor 180D includes a Hall sensor.

The acceleration sensor 180E may detect accelerations of the electronic device 100 in various directions (usually on three axes). When the electronic device 100 is still, a magnitude and a direction of gravity may be detected. The acceleration sensor may be further configured to identify a posture of the electronic device 100, and is used in an application such as switching between landscape mode and portrait mode or a pedometer.

The distance sensor 180F is configured to measure a distance. The electronic device 100 may measure the distance in an infrared manner or a laser manner.

The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a "touch panel". The touch sensor 180K may be disposed on the display 194, and the touch sensor 180K and the display 194 constitute a touchscreen. The touch sensor 180K is configured to detect a touch operation performed on or near the touch sensor 180K. The touch sensor may transfer the detected touch operation to the application processor, to determine a touch event type.

The bone conduction sensor 180M may obtain a vibration signal.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to be connected to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. In some embodiments, an eSIM, namely, an embedded SIM card, is used for the electronic device 100. The eSIM card may be embedded into the electronic device 100, and cannot be separated from the electronic device 100.

A layered architecture, an event-driven architecture, a microcore architecture, a microservice architecture, or a cloud architecture may be used for a software system of the electronic device 100. In this embodiment of the present invention, an Android system with a layered architecture is used as an example to describe a software structure of the electronic device 100.

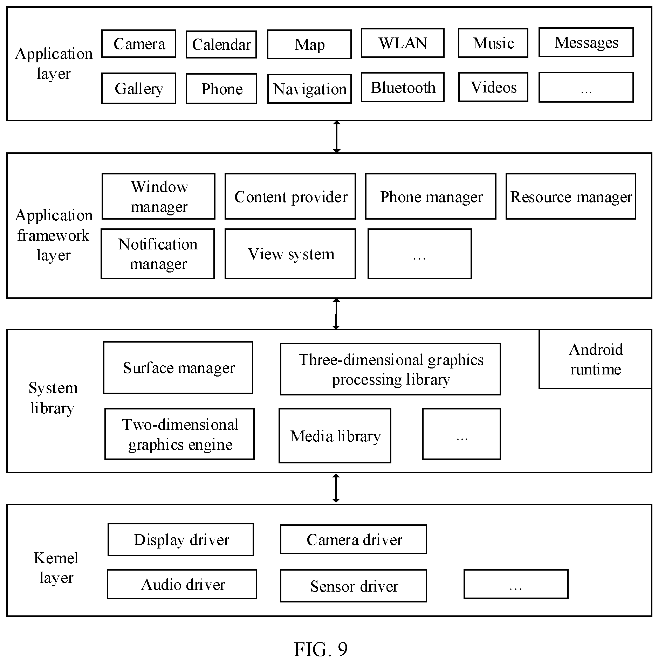

FIG. 9 is a block diagram of a software structure of an electronic device 100 according to an embodiment of the present invention.

In the layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 9, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 9, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, declining, or the like).

The resource manager provides various resources for the application, for example, a localized string, an icon, a picture, a layout file, and a video file.

The notification manager enables the application to display notification information in the status bar, and may be configured to convey a notification-type message. The displayed notification information may automatically disappear after a short pause without requiring user interaction. For example, the notification manager is configured to: notify download completion, give a message notification, and the like. The notification manager may alternatively be a notification that appears in a top status bar of the system in a form of a graph or a scroll bar text, for example, a notification of an application that is run on the background, or may be a notification that appears on the screen in a form of a dialog window. For example, text information is prompted in the status bar, a prompt tone is produced, an electronic device vibrates, or an indicator blinks.

The Android runtime includes a core library and a virtual machine. The Android runtime is responsible for scheduling and management of the Android system.

The core library includes two parts: One part is a function that needs to be called in Java language, and the other part is a core library of Android.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Libraries), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording of a plurality of commonly used audio and video formats, a static image file, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

With reference to a scenario in which capturing and photographing are performed, the following describes an example of a working procedure of software and hardware of an electronic device 100.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a single-tap touch operation and a control corresponding to the single-tap operation is a control of a camera application icon. A camera application invokes an interface at the application framework layer, so that the camera application is started. Then, a camera driver is started by invoking the kernel layer, and a static image or a video is captured through the camera 193.

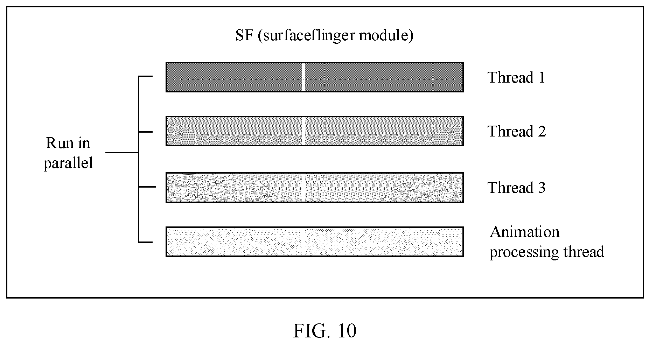

FIG. 10 shows an example of a schematic diagram of multi-linear running of a surfaceflinger module.

A function of the surfaceflinger module is to receive graphical display data from a plurality of sources, compose the data, and then send composed data to a display device. For example, when an application is started, three layers of display are commonly used: a status bar on the top, a navigation bar on the bottom or the side, and an interface of the application. Each layer is separately updated and rendered.

For example, in a start process of the surfaceflinger module, a total of three threads are involved: a thread 1 (for example, a binder thread), a thread 2 (for example, a UI rendering thread), and a thread 3 (for example, a console event monitoring thread). The binder thread is to enable another process, for example, an application process, to perform binder inter-process communication with the surfaceflinger module. Some operations performed during the communication are to enable the UI rendering thread to update a UI of a system. The console event monitoring thread is to monitor a sleep/awake state switching event of a hardware frame buffer. Once the hardware frame buffer is about to enter a sleep or awake state, the console event monitoring thread needs to notify the UI rendering thread, so that the UI rendering thread can perform an operation of turning off or turning on the display.

It may be understood that a plurality of threads in the surfaceflinger module are run in parallel.

As shown in FIG. 10, a thread 1, a thread 2, and a thread 3 exist on the surfaceflinger module side. To resolve a problem that a frame loss occurs because the electronic device 100 places a task item of animation calculation in a UI thread of each application for processing and the application does not process the task item in time, the electronic device 100 creates a new thread (an animation processing thread) on the surfaceflinger module side. A function of the animation processing thread is as follows: UI threads of all applications in the electronic device 100 couple the task item of animation calculation to the animation processing thread on the surfaceflinger module side, and the animation processing thread on the surfaceflinger module side processes the task item of animation calculation of all the applications in the electronic device 100.

It may be understood that the animation processing thread, the thread 1, the thread 2, and the thread 3 are run in parallel, and the animation processing thread is only used for animation calculation. Therefore, a problem that a frame loss occurs due to untimely processing described in the embodiment shown in FIG. 7 does not occur. In this way, a frame loss caused by currently processing animation calculation in a UI thread is greatly eased. In addition, when the electronic device 100 plays the start animation or the exit animation, frame freezing does not occur, to improve user experience.

The following describes how the surfaceflinger module performs animation calculation.

As mentioned in the foregoing term explanation, the animation calculation is calculating parameter information of each image frame in the start animation or the exit animation. In embodiments of this application, the surfaceflinger module calculates parameter information of a next image frame based on initial parameter information of an image frame in the start animation or the exit animation by using an interpolation algorithm.

How the surfaceflinger module calculates the parameter information of the next image frame in the start animation based on the initial parameter information of the image frame in the start animation by using the interpolation algorithm is first described.

It is assumed that the start animation of the application includes M image frames, and the initial parameter information of the image frame in the start animation is preset. For example, the initial parameter information of the image frame in the start animation includes parameter information such as a window size, a display time, a display location, transparency, and a display element of a $1^{st}$ image frame in the start animation. The initial parameter information of the image frame may further include more other information. This is not limited herein in this application.

In some embodiments, the parameter information of the $1^{st}$ image frame may be consistent with parameter information of an icon of a first application. That is, the window size of the $1^{st}$ image frame is the same as a size of the icon of the first application, the display location of the $1^{st}$ image frame is a display location of the icon of the first application, and the display element of the $1^{st}$ image frame is the same as a display element of the icon of the first application.

In some other embodiments, the parameter information of the $1^{st}$ image frame may alternatively be inconsistent with the parameter information of the icon of the first application. This is not limited herein in this application.

The electronic device 100 receives an operation of starting the first application by a user, and then the electronic device 100 starts to play a start animation of the first application. The surfaceflinger module may obtain parameter information of a next image frame based on parameter information of a current image frame by using an interpolation algorithm.

Specifically, the surfaceflinger module obtains initial parameter information of an image frame in the start animation, where the initial parameter information of the image frame in the start animation may be the parameter information of the $1^{st}$ image frame in the start animation. The surfaceflinger module may obtain parameter information of a $2^{nd}$ image frame in the start animation based on the parameter information of the $1^{st}$ image frame in the start animation by using the interpolation algorithm. By analogy, the surfaceflinger module may obtain parameter information of a $3^{rd}$ image frame in the start animation based on the parameter information of the $2^{nd}$ image frame in the start animation by using the interpolation algorithm, ..., and the surfaceflinger module may obtain parameter information of an $N^{th}$ image frame in the start animation based on the parameter information of the $(N-1)^{th}$ image frame in the start animation by using the interpolation algorithm, until the surfaceflinger module obtains parameter information of an $M^{th}$ image frame in the start animation based on parameter information of an $(M-1)^{th}$ image frame in the start animation by using the interpolation algorithm.

Then, how the surfaceflinger module calculates the parameter information of the next image frame in the start animation based on the initial parameter information of the image frame in the exit animation by using the interpolation algorithm is described.

It is assumed that the exit animation of the application includes M image frames. If the electronic device 100 completes playback of the start animation and then receives an operation of exiting the first application by the user, the initial parameter information of the image frame in the exit animation is the parameter information that is of the $M^{th}$ image frame in the start animation and that is obtained through calculation by the surfaceflinger module. If the electronic device 100 receives the operation of exiting the first application by the user before playback of the start animation is completed (for example, the start animation plays to the $N^{th}$ image frame, where N is less than M), the initial parameter information of the image frame in the exit animation is parameter information of the $N^{th}$ image frame that is in the start animation and that is currently displayed by the electronic device 100.

If the electronic device 100 receives the operation of exiting the first application by the user before playback of the start animation is completed (for example, the start animation plays to the $N^{th}$ image frame), the electronic device 100 starts to play the exit animation of the first application. The surfaceflinger module may obtain parameter information of a next image frame based on parameter information of a current image frame by using an interpolation algorithm.

Specifically, the surfaceflinger module obtains initial parameter information of an image frame in the exit animation, where the initial parameter information of the image frame in the exit animation may be parameter information of a 1st image frame in the exit animation, and the initial parameter information of the image frame in the exit animation may be the parameter information of the Nth image frame in the start animation. The surfaceflinger module may obtain 2nd image frame information of the image frame in the exit animation based on the initial parameter information of the image frame in the exit animation by using the interpolation algorithm. By analogy, the surfaceflinger module may obtain 3rd image frame information of the image frame in the exit animation based on the 2nd image frame information of the image frame in the exit animation by using the interpolation algorithm, until the surfaceflinger module obtains Nth image frame information of the image frame in the exit animation based on (N-1)th image frame information of the image frame in the exit animation by using the interpolation algorithm.

The following describes a principle of the interpolation algorithm, that is, how the surfaceflinger module obtains parameter information of a next image frame based on the parameter information of the current image frame in the animation by using the interpolation algorithm.

Values of a parameter in the interpolation algorithm are different, and values of the parameter information that is of the next image frame and that is obtained by the surfaceflinger module based on the parameter information of the current image frame in the animation are also different. Therefore, animation curves obtained by playing the animation by the electronic device 100 are also different.

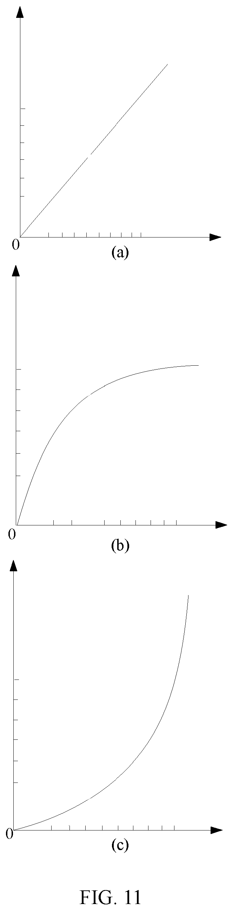

For example, FIG. 11 shows an example of a schematic diagram of effects of animation curves of several interpolation algorithms.

(a) in FIG. 11 shows an example of a first type of constant-speed animation curve. That is, switching time periods between any two adjacent image frames in the start animation or the exit animation played by the electronic device 100 are the same.
(b) in FIG. 11 shows an example of a second type of deceleration animation curve. That is, switching time periods between two adjacent image frames in sequence from front to back in the start animation or the exit animation played by the electronic device 100 decrease sequentially.
(c) in FIG. 11 shows an example of a third type of acceleration animation curve. That is, switching time periods between two adjacent image frames in sequence from front to back in the start animation or the exit animation played by the electronic device 100 increase sequentially.

The animation curve may further include another type, for example, a fade-in fade-out motion curve, which is not listed one by one herein in this application.

According to the interpolation algorithm, the parameter information of the next image frame may be obtained based on the parameter information of the current image frame in the animation by using the following formulas:

$$a=k*x/m \quad \text{Formula (1)}$$

$$V=v+a*t \quad \text{Formula (2)}$$

$$P=p+V*t \quad \text{Formula (3)}$$

As shown in Formula (1), Formula (2), and Formula (3), a physical engine may obtain target parameter information based on preset parameter information of the image frame by using Formula (1), Formula (2), and Formula (3). In Formula (1), Formula (2), and Formula (3), a represents an acceleration, and k represents rigidity. It can be learned that k=-F/x according to the Hooke's law of the spring, where x represents a length of a spring deformation, F represents a force received when the length of the spring deformation is x, and F may be represented as F=m*a according to a Newton mechanical formula, where m is an instruction of an object. It can be learned that Acceleration a=-k*x/m according to the formula k=-F/x and the formula F=m*a.

v represents an initial speed of the object, V represents a speed at a next moment of the object, P represents an initial location of the object, p represents a location at the next moment of the object, and t represents parameter information that is currently calculated by the electronic device 100 and that is of a specific image frame in the start animation or the exit animation.

It should be noted that, when the electronic device 100 calculates parameter information of an image frame in the start animation, v in Formula (3) is a positive number. When the electronic device 100 calculates parameter information of an image frame in the exit animation, v in Formula (3) is a negative number.

In this way, according to the interpolation algorithm, the parameter information of the next image frame may be obtained by using the parameter information of the current image frame as an input p in Formula (3), and outputting P by using Formula (3).

For example, the electronic device 100 is displaying a 1st image frame in the start animation. The electronic device 100 needs to obtain parameter information of a 2nd image frame based on the parameter information of the 1st image frame in a fixed time, and the electronic device 100 composes the 2nd image frame based on the parameter information of the 2nd image frame.

If preset location information of the 1st image frame is (x, y), where x is a length of the 1st image frame, and y is a width of the 1st image frame, the electronic device 100 inputs the location information (x, y) of the 1st image frame into Formula (3), and outputs location information (x1, y1) of the 2nd image frame by using Formula (3), where x1=x+v+k*x/m, and y1=y+v+k*x/m. Herein, v is a positive number.

For ease of understanding of this application, an execution effect of the interpolation algorithm by using the constant-speed animation curve is described in this embodiment of this application.

When the animation curve is a constant-speed animation curve, a=0 in Formula (1), Formula (2), and Formula (3), where v is a fixed value. When the electronic device 100 calculates parameter information of an image frame in the start animation, v is a positive number. When the electronic device 100 calculates parameter information of an image frame in the exit animation, v is a negative number.

According to the interpolation algorithm, the parameter information of the next image frame may be obtained based on the parameter information of the current image frame by using the following formula:

$$P=p+v*t \quad \text{Formula (4)}$$

As shown in Formula (4), P represents an initial location of the object, p represents a location at a next moment of the object, and t represents time. In this way, a physical engine may obtain the parameter information of the next image frame by using the parameter information of the current image frame as an input p in Formula (3), and outputting P by using Formula (3).

For example, the electronic device 100 is displaying a 1st image frame in the start animation. The electronic device 100 needs to obtain parameter information of a 2nd image frame based on the parameter information of the 1st image frame in a fixed time, and the electronic device 100 composes the 2nd image frame based on the parameter information of the 2nd image frame.

If location information of the 1st image frame is (x, y), where x is a preset length of the 1st image frame, and y is a preset width of the 1st image frame, the surfaceflinger module inputs the location information (x, y) of the 1st image frame into Formula (3), and outputs target location information (x1, y1) of the 2nd image frame by using Formula (3), where x1=x+v, and y1=y+v.

In this way, the surfaceflinger module may obtain the parameter information of the next image frame in the start animation or the exit animation based on the parameter information of the currently displayed image frame by using the interpolation algorithm. The surfaceflinger module composes the next image frame based on the parameter information of the next image frame in the start animation or the exit animation, and displays the next image frame on the display. In this way, an animation effect displayed by the electronic device 100 is smoother when the electronic device 100 obtains, by using the interpolation algorithm, the image frame composed based on the parameter information of the image frame to play the animation.

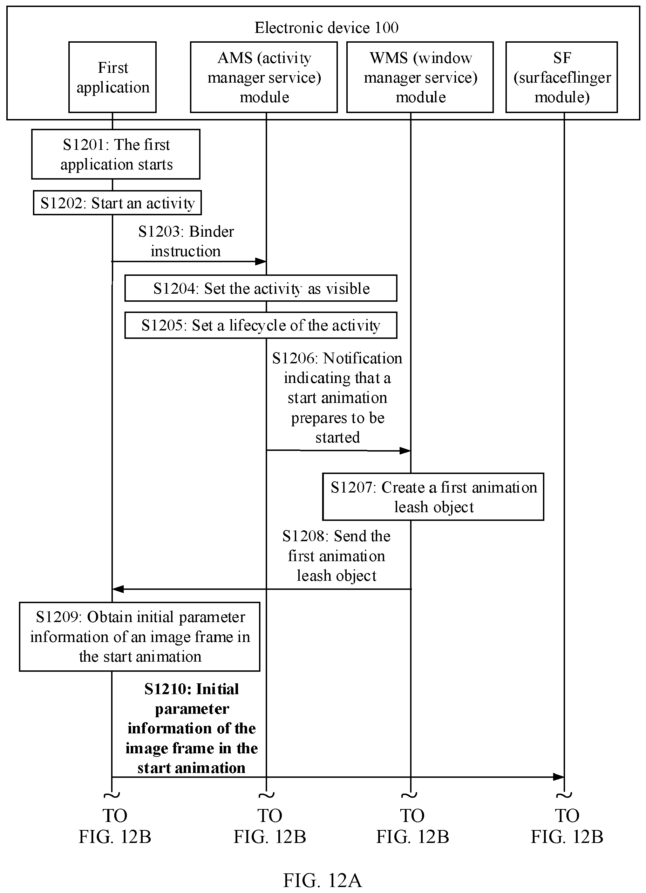

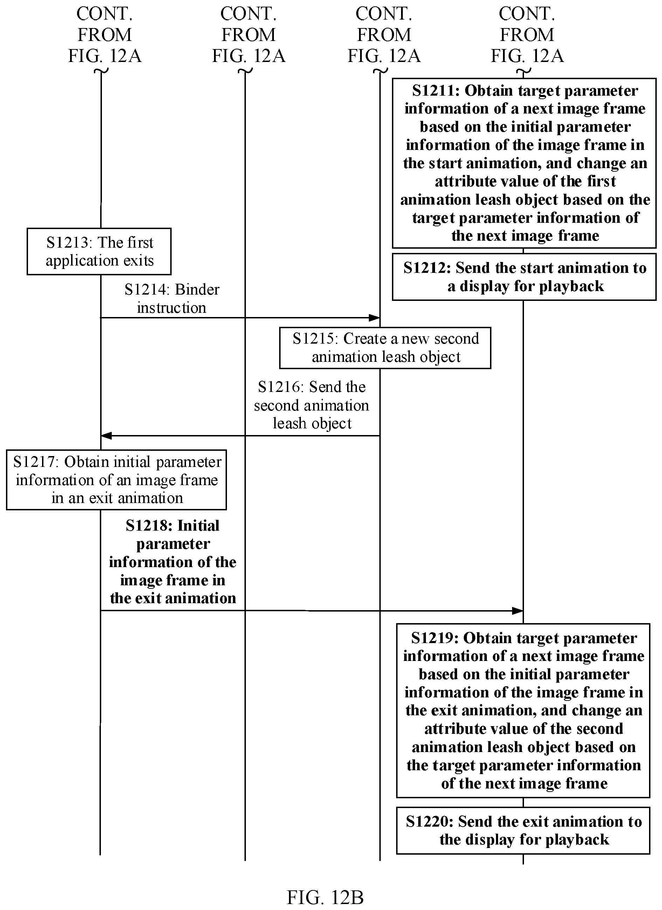

FIG. 12A and FIG. 12B show an example of another schematic diagram of playing a start animation and playing an exit animation by an electronic device 100.

The flowchart shown in FIG. 12A and FIG. 12B includes a first application, an AMS (activity manager service) module, a WMS (window manager service) module, and an SF (surface flinger, surfaceflinger module).

First, the electronic device 100 receives an operation of starting the first application by a user, and in response to the operation of starting the first application by the user, the electronic device 100 creates a first animation leash object by using the AMS module and the WMS module. Then, the WMS module sends an identifier of the first animation leash object to the first application, and after the first application receives the identifier of the first animation leash object, the first application starts to perform a start animation.

Specifically, in S1201 to S1207, a procedure of a method in which the AMS module and the WMS module create the first animation leash object is described. It should be noted that the procedure of the method in which the AMS module and the WMS module create the first animation leash object may include more or fewer steps than S1201 to S1207. This is not limited herein in this application. In addition, there is no specific limitation of an execution sequence of steps S1201 to S1207 in this application.

S1201: The first application starts.

S1202. The first application starts an activity.

S1203: The first application sends a binder instruction to an AMS (activity manager service, activity manager service) module.

S1204: The AMS module sets the activity as visible.

S1205. The AMS module sets a lifecycle of the activity.

S1206: The AMS module sends, to a window manager service (window manager service, WMS) module, a notification indicating that a start animation prepares to be started.

S1207: The WMS module receives and responds to the notification that is sent by the AMS module and that indicates that the start animation prepares to be started, and the WMS module prepares to start animation, and creates the first animation leash object.

After the first application receives an identifier of the first animation leash object, the first application notifies the SF module to start to perform the start animation. After the first application determines initial parameter information of the image frame in the start animation, the first application sends the initial parameter information of the image frame in the start animation to the SF module. The SF module determines parameter information of each image frame in the start animation based on the initial parameter information of the image frame in the start animation, and composes the image frame based on the parameter information of each image frame in the start animation. The SF module changes, based on the parameter information of each image frame in the start animation, an attribute of a window drawn by the first animation leash object, and the SF module displays the composed image frame in the window drawn by the first animation leash object.

Specifically, in S1208 to S1212, a procedure of a method in which the SF module plays the start animation is described. It should be noted that the procedure of the method in which the SF module plays the start animation may include more or fewer steps than S1208 to S1212. This is not limited herein in this application. In addition, there is no specific limitation of an execution sequence of steps S1208 to S1212 in this application.

S1208: The WMS module sends the first animation leash object to the first application.

For specific descriptions of S1201 to S1208, refer to related descriptions of S501 to S508 in FIG. 5A. Details are not described herein again in this application.

S1209: The first application obtains initial parameter information of an image frame in the start animation.

It may be understood that start animations of different applications may be different, and correspondingly initial parameter information of image frames in the start animations may also be different.

The initial parameter information of the image frame in the start animation includes information such as a window size, a display time, a display location, transparency, and a display element of the image frame. The parameter information of the image frame may further include more other information. This is not limited herein in this application.

S1210: The first application sends the initial parameter information of the image frame in the start animation to the surfaceflinger module.

S1211: The surfaceflinger module obtains target parameter information of a next image frame based on the initial parameter information of the image frame in the start animation, and changes an attribute value of the first animation leash object based on the target parameter information of the next image frame.

In S1210 and S1211, the first application sends a task item of animation calculation to the surfaceflinger module, and the surfaceflinger module performs the animation calculation. In this way, a frame loss caused by currently processing animation calculation in a UI thread can be greatly eased.

Specifically, the surfaceflinger module creates a new animation processing thread based on an original thread, and a task of the thread is to calculate a task item of animation calculation processed in all UI threads in the electronic device 100.

Specifically, the surfaceflinger module receives the initial parameter information that is of the image frame in the start animation and that is sent by the first application, and obtains the target parameter information of the next image frame through calculation based on the initial parameter information of the image frame in the start animation. The first animation leash object draws a first window, and the surfaceflinger module changes, based on the target parameter information of the next image frame, an attribute value of the first window drawn by the first animation leash object. The attribute value of the first animation leash object is the same as the target parameter information of the next image frame. For example, if the target parameter information of the next image frame includes information such as a window size, a display time, a display location, transparency, and a display element of the next image frame, the attribute value of the first window drawn by the first animation leash object also includes information such as a window size, a display time, a display location, transparency, and a display element.

It may be understood that the first window drawn by the first animation leash object may be a window displayed in a user interface of the electronic device 100 in a floating manner. Then, the surfaceflinger module sets an attribute of the "window" based on the initial parameter information of the image frame in the start animation, so that the window can display an image based on a display sequence and display statuses of preset image frames in the start animation.

S1212: The surfaceflinger module sends the start animation to the display for playback.

For how the first application plays the start animation, refer to the embodiments shown in FIG. 1A to FIG. 1L, FIG. 2A to FIG. 2M, and FIG. 3A to FIG. 3E. Details are not described herein again in this application.

The electronic device 100 receives an operation of exiting the first application by the user. The electronic device 100 may receive, in a process of playing the start animation, the operation of exiting the first application by the user, or may receive, after playing the start animation, the operation of exiting the first application by the user. This is not limited herein in this application. In response to the operation of exiting the first application by the user, the electronic device 100 creates a second animation leash object by using the AMS module and the WMS module. Then, the WMS module sends an identifier of the second animation leash object to the first application, and after the first application receives the identifier of the second animation leash object, the first application starts to perform an exit animation.

Specifically, in S1213 to S1216, a procedure of a method in which the AMS module and the WMS module create the second animation leash object is described. It should be noted that the procedure of the method in which the AMS module and the WMS module create the second animation leash object may include more or fewer steps than S1213 to S1216. This is not limited herein in this application. In addition, there is no specific limitation of an execution sequence of steps S1213 to S1216 in this application.

S1213: The first application exits.

After the first application is started, the electronic device 100 starts to play the start animation. In this case, the electronic device 100 may receive and respond to the operation of exiting the first application by the user, and then the first application exits.

When the first application exits, the electronic device 100 plays an exit animation.

S1214: The first application sends a binder instruction to the WMS module.

When the first application exits, the first application sends the binder instruction to the WMS module, where the binder instruction instructs the WMS module to start to perform the exit animation.

S1215: The WMS module receives and responds to the binder instruction to create a new second animation leash object.

Similarly, the WMS module creates the second animation leash object by using the surface animator. The second animation leash object is a temporary object created by the surface animator, and may control which windows need to be moved, and the first application may control, by using the second animation leash object, parameter information of each image frame in the exit animation.

S1216. The WMS module sends the second animation leash object to the first application.

After the first application receives an identifier of the second animation leash object, the first application notifies the SF module to start to perform the exit animation. After the first application determines initial parameter information of the image frame in the exit animation, the first application sends the initial parameter information of the image frame in the exit animation to the SF module. The SF module determines parameter information of each image frame in the exit animation based on the initial parameter information of the image frame in the exit animation, and composes the image frame based on the parameter information of each image frame in the exit animation. The SF module changes, based on the parameter information of each image frame in the exit animation, an attribute of a window drawn by the first animation leash object, and the SF module displays the composed image frame in the window drawn by the first animation leash object.

Specifically, in S1217 to S1220, a procedure of a method in which the SF module plays the exit animation is described. It should be noted that the procedure of the method in which the SF module plays the exit animation may include more or fewer steps than S1217 to S1220. This is not limited herein in this application. In addition, there is no specific limitation of an execution sequence of steps S1217 to S1220 in this application.

S1217: The first application obtains initial parameter information of an image frame in an exit animation.

It may be understood that exit animations of different applications may be different, and correspondingly initial parameter information of image frames in the exit animations may also be different.

The initial parameter information of the image frame in the exit animation includes information such as a window size, a display time, a display location, transparency, and a display element of the image frame. The parameter information of the image frame may further include more other information. This is not limited herein in this application.

S 1218: The first application sends the initial parameter information of the image frame in the exit animation to the surfaceflinger module.

S 1219: The surfaceflinger module obtains target parameter information of a next image frame based on the initial parameter information of the image frame in the exit animation, and changes an attribute value of the second animation leash object based on the target parameter information of the next image frame.

In S 1218 and S 1219, the first application sends a task item of exit animation calculation to the surfaceflinger module, and the surfaceflinger module performs the animation calculation. In this way, a frame loss caused by currently processing animation calculation in a UI thread can be greatly eased.

Specifically, the surfaceflinger module creates a new animation processing thread based on an original thread, and a task of the thread is to calculate a task item of animation calculation processed in all UI threads in the electronic device 100.

Specifically, the surfaceflinger module receives the initial parameter information that is of the image frame in the exit animation and that is sent by the first application, and obtains the target parameter information of the next image frame through calculation based on the initial parameter information of the image frame in the exit animation. The second animation leash object draws a second window, and the surfaceflinger module changes, based on the target parameter information of the next image frame, an attribute value of the second window drawn by the second animation leash object. The attribute value of the second window drawn by the second animation leash object is the same as the target parameter information of the next image frame. For example, if the target parameter information of the next image frame includes information such as a window size, a display time, a display location, transparency, and a display element of the next image frame, the attribute value of the second animation leash object also includes information such as a window size, a display time, a display location, transparency, and a display element.

It may be understood that the second window drawn by the second animation leash object may be a window displayed in a user interface of the electronic device 100 in a floating manner. Then, the surfaceflinger module sets an attribute of the "window" based on the initial parameter information of the image frame in the start animation, so that the window can display an image based on a display sequence and display statuses of preset image frames in the start animation.

It should be noted that, the first animation leash object and the second animation leash object are two animation objects.

S 1220: The surfaceflinger module sends the exit animation to the display for playback.

After composing the image frame based on updated parameter information of the image frame, the surfaceflinger module sends the composed image frame to the display for display.

How the electronic device 100 plays the exit animation is explained in the foregoing technical term explanation. For details, refer to the foregoing embodiments. The details are not described herein again in this application.

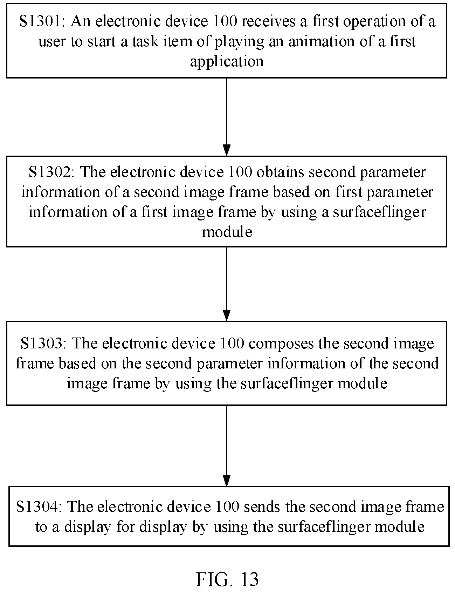

FIG. 13 shows an example of a flowchart of an animation calculation method according to an embodiment of this application.

S1301: An electronic device 100 receives a first operation of a user to start a task item of playing an animation of a first application.

Herein, the animation may be a start animation of the first application or an exit animation of the first application.

When the first operation is starting the first application, the animation corresponds to the start animation of the first application. The first operation may be an operation of tapping an icon of the first application. For example, the first operation may be an operation of tapping the icon 1013 of the Huawei video application shown in FIG. 1G.

The first operation of starting the first application may alternatively be another operation. This is not limited herein in this application.

When the first operation is exiting the first application, the animation corresponds to the exit animation of the first application. The first operation may be a sliding-up operation performed on a display of the electronic device 100, or the first operation may be a tap operation performed on a home screen back button in three-button navigation. The home screen back button in three-button navigation may be a physical button or a virtual button. This is not limited herein in this application.

The first operation of exiting the first application may alternatively be another operation. This is not limited herein in this application.

S1302: The electronic device 100 obtains second parameter information of a second image frame based on first parameter information of a first image frame by using a surfaceflinger module.

Before the surfaceflinger module obtains the second parameter information of the second image frame based on the first parameter information of the first image frame, the electronic device 100 needs to create a new animation processing thread on the surfaceflinger module. For details, refer to the embodiment shown in FIG. 10.

In some embodiments, the surfaceflinger module may obtain the second parameter information of the second image frame based on the first parameter information of the first image frame by using an interpolation algorithm. In addition to the interpolation algorithm, the surfaceflinger module may obtain the second parameter information of the second image frame based on the first parameter information of the first image frame by using another method.

Before obtaining the second parameter information of the second image frame based on the first parameter information of the first image frame, the surfaceflinger module needs to obtain parameter information of the interpolation algorithm. The parameter information of the interpolation algorithm includes an animation type, elastic force, and the like. The animation type may be, for example, a constant-speed animation type, a fade-in fade-out animation type, and an acceleration animation type. An elastic coefficient is the rigidity k described in FIG. 11. The parameter information of the interpolation algorithm may further include more other parameter information, such as a damping factor. This is not limited herein in this application.

After the first application determines the parameter information of the interpolation algorithm, the first application sends the parameter information of the interpolation algorithm to the surfaceflinger module. The surfaceflinger module receives the parameter information that is of the interpolation algorithm and that is sent by the first application, and obtains the second parameter information of the second image frame based on the first parameter information of the first image frame by using the interpolation algorithm.

It may be understood that parameter information that is of the interpolation algorithm and that is determined by different applications may be the same as or different. This is not limited herein in this application.

In addition, before the surfaceflinger module obtains the second parameter information of the second image frame based on the first parameter information of the first image frame, the surfaceflinger module further needs to obtain initial parameter information of an image frame in the animation. The surfaceflinger module obtains parameter information of a next image frame through calculation based on the parameter information of the currently displayed image frame by using the interpolation algorithm. Therefore, the surfaceflinger module needs to obtain initial parameter information of an image frame in the start animation or the exit animation.

The electronic device 100 sends, to the surfaceflinger module through the first application, the initial parameter information of the image frame in the start animation or the exit animation. The surfaceflinger module obtains the initial parameter information that is of the image frame in the start animation or the exit animation and that is sent by the first application. The initial parameter information of the image frame in the start animation or the exit animation includes information such as a window size, a display time, a display location, transparency, and a display element of the image frame.

In some embodiments, the electronic device 100 obtains the initial parameter information of the image frame in the start animation, where the initial parameter information of the image frame in the start animation may be understood as parameter information of a 1st image frame in the start animation. In some embodiments, the first image frame may be a 1st image frame in a first start animation. The electronic device 100 may obtain parameter information of a 2nd image frame in the start animation based on the parameter information of the 1st image frame in the start animation by using the interpolation algorithm. By analogy, the electronic device 100 may obtain parameter information of a 3rd image frame in the start animation based on the parameter information of the 2nd image frame in the start animation by using the interpolation algorithm, ..., and the electronic device 100 may obtain parameter information of an Nth image frame in the start animation based on the parameter information of the (N-1)th image frame in the start animation by using the interpolation algorithm, until the electronic device 100 obtains parameter information of an Mth image frame in the start animation based on parameter information of an (M-1)th image frame in the start animation by using the interpolation algorithm. The start animation includes M image frames. That is, the electronic device 100 obtains the parameter information of the next image frame based on the parameter information of the currently displayed image frame by using the interpolation algorithm.

Content of this part is described in detail in the foregoing embodiments. For details, refer to the descriptions in the foregoing embodiments. The details are not described herein again in this application.

In some other embodiments, the electronic device 100 obtains initial parameter information of an image frame in the exit animation.

In a possible implementation, the electronic device 100 has completed playing of the start animation. The electronic device 100 displays a main interface of the first application. The electronic device 100 receives a second operation of exiting the first application. In this case, the electronic device 100 learns that the initial parameter information of the image frame in the exit animation is parameter information of an Mth image frame in the start animation. The Mth image frame in the start animation is a last image frame in the start animation.

In some embodiments, the second image frame is a last image frame in the first animation. The electronic device determines third parameter information of a third image frame based on the second parameter information by using the surface flinger, where the third image frame is the 1st image frame in the second animation. The electronic device composes the third image frame based on the third parameter information by using the surface flinger. The electronic device displays the third image frame.

First, the electronic device 100 obtains the initial parameter information of the image frame in the exit animation, where the initial parameter information of the image frame in the exit animation is parameter information of a 1st image frame in the exit animation. The electronic device 100 may obtain parameter information of a 2nd image frame in the exit animation based on the parameter information of the 1st image frame in the exit animation by using the interpolation algorithm. By analogy, the electronic device 100 may obtain parameter information of a 3rd image frame in the exit animation based on the parameter information of the 2nd image frame in the exit animation by using the interpolation algorithm, ..., and the electronic device 100 may obtain parameter information of an Nth image frame in the exit animation based on the parameter information of the (N-1)th image frame in the exit animation by using the interpolation algorithm, until the electronic device 100 obtains parameter information of an Mth image frame in the exit animation based on parameter information of an (M-1)th image frame in the exit animation by using the interpolation algorithm. The exit animation includes M image frames. That is, the electronic device 100 obtains the parameter information of the next image frame based on the parameter information of the currently displayed image frame by using the interpolation algorithm.

In another possible implementation, in a process in which the electronic device 100 plays the start animation, for example, the electronic device 100 currently displays an Nth image frame (for example, the second image frame) in the start animation, the electronic device 100 receives a second operation of exiting the first application. In this case, the electronic device 100 learns that the initial parameter information of the image frame in the exit animation is parameter information of the Nth image frame in the start animation.

First, the electronic device 100 obtains the initial parameter information of the image frame in the exit animation, where the initial parameter information of the image frame in the exit animation is parameter information of a 1st image frame in the exit animation. The electronic device 100 may obtain parameter information of a 2nd image frame in the exit animation based on the parameter information of the 1st image frame in the exit animation by using the interpolation algorithm. By analogy, the electronic device 100 may obtain parameter information of a 3rd image frame in the exit animation based on the parameter information of the 2nd image frame in the exit animation by using the interpolation algorithm, ..., and the electronic device 100 may obtain parameter information of an Nth image frame in the exit animation based on the parameter information of the (N-1)th image frame in the exit animation by using the interpolation algorithm. The Nth image frame in the start animation is a last image frame in the exit animation. That is, the electronic device 100 obtains the parameter information of the next image frame based on the parameter information of the currently displayed image frame by using the interpolation algorithm.

Content of this part is described in detail in the foregoing embodiments. For details, refer to the descriptions in the foregoing embodiments. The details are not described herein again in this application.

S1303: The electronic device 100 composes the second image frame based on the second parameter information of the second image frame by using the surfaceflinger module.

S1304: The electronic device 100 sends the second image frame to the display for display by using the surfaceflinger module.

When the surfaceflinger module composes the second image frame based on the second parameter information of the second image frame, the electronic device 100 displays the second image frame in the start animation or the exit animation.

The surfaceflinger module receives the parameter information of the interpolation algorithm and the first parameter information of the first image frame that are sent by the first application, and the surfaceflinger module may obtain the second parameter information of the second image frame based on the first parameter information of the first image frame by using the interpolation algorithm. The surfaceflinger module composes the second image frame based on the second parameter information of the second image frame, and sends the second image frame to the display for display.

For how the surfaceflinger module obtains the second parameter information of the second image frame based on the first parameter information of the first image frame by using the interpolation algorithm, refer to the foregoing embodiment in FIG. 11. Details are not described herein again in this application.

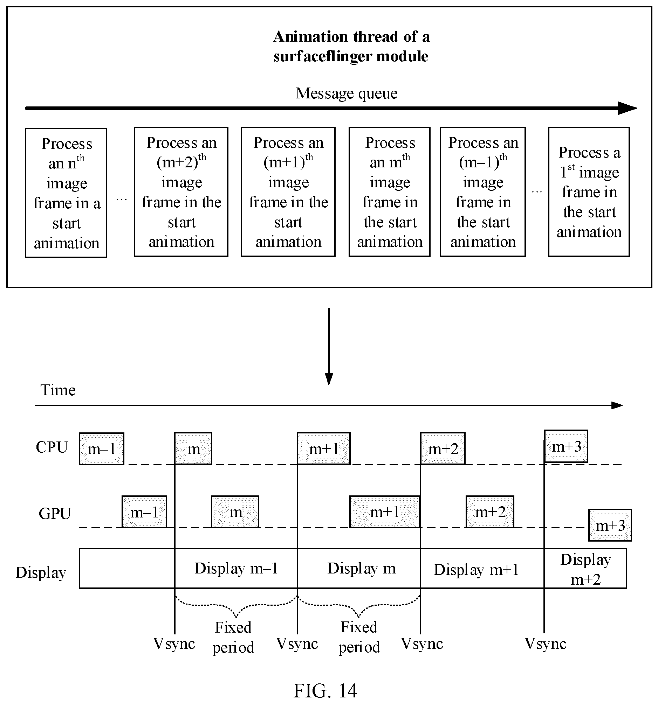

FIG. 14 shows an example of a schematic diagram of parameter calculation of an image frame in an animation thread in a surfaceflinger module, and an image frame and a display image frame in a composed animation.

To-be-processed task items in a message queue of the animation thread include only animation calculation, such as processing a $1^{st}$ image frame in the start animation, ..., processing an $(m-1)^{th}$ image frame in the start animation, processing an $m^{th}$ image frame in the start animation, processing an $(m+1)^{th}$ image frame in the start animation, processing an $(m+2)^{th}$ image frame in the start animation, ..., and processing an $n^{th}$ image frame in the start animation. Animation threads are sequentially executed in a sequence of the task items in the message queue.

It may be understood that when the animation thread processes the $(m-1)^{th}$ image frame, the animation thread invokes the CPU to draw the $(m-1)^{th}$ image frame. After the animation thread invokes the CPU to obtain parameter information of the $(m-1)^{th}$ image frame based on parameter information of the $(m-2)^{th}$ image frame and completes drawing of the $(m-1)^{th}$ image frame, the animation thread invokes the GPU to render the $(m-1)^{th}$

image frame drawn by the CPU. After the GPU completes rendering of the $(m-1)^{th}$ image frame drawn by the CPU, the animation thread sends the $(m-1)^{th}$ image frame to the display for display.

As shown in FIG. 14, when the animation thread displays the $(m-1)^{th}$ image frame, and the animation thread is about to process an $m^{th}$ image frame, the animation thread sends a Vsync signal, and the animation thread needs to invoke the CPU and the GPU to complete parameter calculation, drawing, and rendering of the $m^{th}$ image frame in a fixed period (for example, 11.1 ms). After the animation thread sends the Vsync signal, the animation thread starts to invoke the CPU to obtain parameter information of the $m^{th}$ image frame based on parameter information of the $(m-1)^{th}$ image frame and draw the $m^{th}$ image frame. After the CPU completes drawing of the $m^{th}$ image frame, the animation thread invokes the GPU to render the $m^{th}$ image frame drawn by the CPU. If the animation thread completes parameter calculation, drawing, and rendering of the $m^{th}$ image frame in a fixed period, the animation thread sends the $m^{th}$ image frame to the display for display.

By analogy, when processing each image frame subsequently, the animation thread sends a Vsync signal, and if the animation thread completes parameter calculation, drawing, and rendering of the image frame in a fixed period, the animation thread sends the image frame to the display for display. It may be understood that, only after the animation thread sends the Vsync signal, the UI thread invokes the CPU to calculate parameter information of a next image frame based on parameter information of the current image frame, draw and render the next frame of image, and draw the next frame of image.

It should be noted that if the Vsync signal is sent to invoke the CPU/GPU to complete parameter information of a specified image frame and to draw and render the specified image frame in a fixed period, the specified image frame may be displayed on the display.

In conclusion, the foregoing embodiments are merely intended for describing the technical solutions of this application, but not for limiting the technical solutions of this application. Although this application is described in detail with reference to the foregoing embodiments, a person of ordinary skill in the art should understand that modifications to the technical solutions recorded in the foregoing embodiments may still be made, without departing from the scope of the technical solutions of embodiments of this application.

**Claims**

1. An animation calculation method, wherein the method comprises:

receiving, by an electronic device (100), a first operation of a user, wherein the first operation is used to start playing a first animation of a first application;

displaying, by the electronic device (100), a first image frame in the first animation based on the first operation, and determining second parameter information of a second image frame in the first animation based on first parameter information of the first image frame by using a surfaceflinger module;

composing, by the electronic device (100), the second image frame based on the second parameter information by using the surface flinger; and

displaying, by the electronic device(100), the second image frame;

wherein before the displaying, by the electronic device (100), a first image frame in the first animation, the method further comprises:

creating, by the electronic device (100), a new animation processing thread in the surfaceflinger; and

the determining, by the electronic device (100), second parameter information of a second image frame in the first animation based on first parameter information of the first image frame by using a surfaceflinger module comprises:

determining, by the electronic device (100), the second parameter information of the second image frame based on the first parameter information of the first image frame by using the new animation processing thread; wherein the new animation processing thread is used only for processing of the first and second image frames of the first animation;

wherein the determining, by the electronic device (100), second parameter information of a second image frame based on first parameter information of the first image frame by using a surface flinger comprises:

obtaining, by the electronic device (100), the second parameter information through an interpolation operation based on the first parameter information by using the surface flinger; and

wherein the first parameter information comprises any one or more of the following: a location of a central point of the first image frame, a window size of the first image frame, transparency of the first image frame, and a rounded corner size of the first image frame; and

the second parameter information comprises any one or more of the following: a location of a central point of the second image frame, a window size of the second image frame, transparency of the second image frame, and a rounded corner size of the second image frame.

2. The method according to claim 1, wherein the first image frame is a 1st image frame in the first animation; and

before the determining, by the electronic device (100), second parameter information of a second image frame in the first animation based on first parameter information of the first image frame by using a surface flinger, the method further comprises:

obtaining the first parameter information through the first application by using the surface flinger module.

3. The method according to claim 1, wherein after the displaying, by the electronic device (100), the second image frame, the method further comprises:

receiving, by the electronic device (100), a second operation of the user, wherein the second operation is used to start playing a second animation of the first application;

determining, by the electronic device (100) based on the second operation, third parameter information of a third image frame based on the second parameter information by using the surface flinger, wherein the third image frame is a 1st image frame in the second animation;

composing, by the electronic device (100), the third image frame based on the third parameter information by using the surface flinger; and

displaying, by the electronic device (100), the third image frame.

4. The method according to claim 3, wherein the second image frame is a last image frame in the first animation; and before the receiving, by the electronic device (100), a second operation of the user, the method further comprises:

displaying, by the electronic device (100), a first user interface of the first application after playing the first animation.

5. The method according to any one of claims 1 to 4, wherein

the third parameter information comprises any one or more of the following: a location of a central point of the third image frame, a window size of the third image frame, transparency of the third image frame, and a rounded corner size of the third image frame.

6. An electronic device (100), wherein the electronic device (100) is a first electronic device, and comprises one or more processors (110) and one or more memories (121);
the one or more memories (121) are coupled to the one or more processors (110), the one or more memories (121) are configured to store computer program code, the computer program code comprises computer instructions, and the one or more processors (110) invoke the computer instructions, to enable the electronic device (100) to perform the following operations:

receiving a first operation of a user, wherein the first operation is used to start playing a first animation of a first application;
displaying a first image frame in the first animation based on the first operation, and determining second parameter information of a second image frame in the first animation based on first parameter information of the first image frame by using a surfaceflinger module;
composing the second image frame based on the second parameter information by using the surface flinger; and
displaying the second image frame;
wherein before the electronic device (100) displays the first image frame in the first animation, the one or more processors (110) are specifically configured to invoke the computer instructions, to enable the electronic device (100) to perform the following operations:

creating a new animation processing thread in the surface flinger; and
determining the second parameter information of the second image frame based on the first parameter information of the first image frame by using the new animation processing thread, wherein the new animation processing thread is used only for processing of the first and second image frames of the first animation;
wherein the one or more processors (110) are specifically configured to invoke the computer instructions, to enable the electronic device (100) to perform the following operation:

obtaining the second parameter information through an interpolation operation based on the first parameter information by using the surface flinger; and
wherein the first parameter information comprises any one or more of the following: a location of a central point of the first image frame, a window size of the first image frame, transparency of the first image frame, and a rounded corner size of the first image frame; and
the second parameter information comprises any one or more of the following: a location of a central point of the second image frame, a window size of the second image frame, transparency of the second image frame, and a rounded corner size of the second image frame.

7. The electronic device (100) according to claim 6, wherein the first image frame is a $1^{st}$ image frame in the first animation; and
before the electronic device (100) determines the second parameter information of the second image frame in the first animation based on the first parameter information of the first image frame by using the surface flinger, the one or more processors are specifically configured to invoke the computer instructions, to enable the electronic device (100) to perform the following operation:
obtaining the first parameter information through the first application by using the surface flinger.

8. The electronic device (100) according to claim 6, wherein after the electronic device (100) displays the second image frame, the one or more processors are specifically configured to invoke the computer instructions, to enable the electronic device (100) to perform the following operations:

receiving a second operation of the user, wherein the second operation is used to start playing a second animation of the first application;
determining, based on the second operation, third parameter information of a third image frame based on the second parameter information by using the surface flinger, wherein the third image frame is a $1^{st}$ image frame in the second animation;
composing the third image frame based on the third parameter information by using the surface flinger; and
displaying the third image frame.

9. The electronic device (100) according to claim 8, wherein the second image frame is a last image frame in the first animation; and before the electronic device (100) receives the second operation of the user, the one or more processors are specifically configured to invoke the computer instructions, to enable the electronic device (100) to perform the following operation:

displaying a first user interface of the first application after playing the first animation.

10. The electronic device according to any one of claims 6 to 9, wherein
the third parameter information comprises any one or more of the following: a location of a central point of the third image frame, a window size of the third image frame, transparency of the third image frame, and a rounded corner size of the third image frame.

11. A computer-readable storage medium, comprising instructions, wherein when the instructions are run on an electronic device (100), the electronic device (100) is enabled to perform the method according to any one of claims 1 to 5.

12. A computer program comprising instructions which, when the program is executed by a processor, cause the processor to carry out the method according to claims 1 to 5.

13. A computer program product including instructions which, when the computer program product runs on an electronic device, the electronic device is enabled to perform method according to claims 1 to 5.

**Patentansprüche**

1. Animationsberechnungsverfahren, wobei das Verfahren Folgendes umfasst:

Empfangen, durch eine elektronische Einrichtung (100), eines ersten Vorgangs eines Benutzers, wobei der erste Vorgang dazu verwendet wird, Wiedergeben einer ersten Animation einer ersten Anwendung zu starten;
Anzeigen, durch die elektronische Einrichtung (100), eines ersten Bildframes in der ersten Animation basierend auf dem ersten Vorgang und Bestimmen zweiter Parameterinformationen eines zweiten Bildframes in der ersten Animation basierend auf ersten Parameterinformationen des ersten Bildframes unter Verwendung eines Surfaceflinger-Moduls;
Zusammenstellen, durch die elektronische Einrichtung (100), des zweiten Bildframes basierend auf den zweiten Parameterinformationen unter Verwendung des Surfaceflingers; und
Anzeigen, durch die elektronische Einrichtung (100), des zweiten Bildframes;
wobei das Verfahren vor dem Anzeigen, durch die elektronische Einrichtung (100), eines ersten Bildframes in der ersten Animation ferner Folgendes umfasst:
Erstellen, durch die elektronische Einrichtung (100), eines neuen Animationsverarbeitungsthreads in dem Surfaceflinger; und das Bestimmen, durch die elektronische Einrichtung (100), zweiter Parameterinformationen eines zweiten Bildframes in der ersten Animation basierend auf ersten Parameterinformationen des ersten Bildframes unter Verwendung eines Surfaceflinger-Moduls Folgendes umfasst:

Bestimmen, durch die elektronische Einrichtung (100), der zweiten Parameterinformationen des zweiten Bildframes basierend auf den ersten Parameterinformationen des ersten Bildframes unter Verwendung des neuen Animationsverarbeitungsthreads;
wobei der neue Animationsverarbeitungsthread nur zum Verarbeiten des ersten und des zweiten Bildframes der ersten Animation verwendet wird;
wobei das Bestimmen, durch die elektronische Einrichtung (100), zweiter Parameterinformationen eines zweiten Bildframes basierend auf ersten Parameterinformationen des ersten Bildframes unter Verwendung eines Surfaceflingers Folgendes umfasst:

Erlangen, durch die elektronische Einrichtung (100), der zweiten Parameterinformationen mittels eines Interpolationsvorgangs basierend auf den ersten Parameterinformationen unter Verwendung des Surfaceflingers; und
wobei die ersten Parameterinformationen eines oder mehrere der Folgenden umfassen: eine Lage eines Mittelpunkts des ersten Bildframes, eine Fenstergröße des ersten Bildframes, eine Transparenz des ersten Bildframes und eine Größe abgerundeter Ecken des ersten Bildframes; und
die zweiten Parameterinformationen eines oder mehrere der Folgenden umfassen: eine Lage eines Mittelpunkts des zweiten Bildframes, eine Fenstergröße des zweiten Bildframes, eine Transparenz des zweiten Bildframes und eine Größe abgerundeter Ecken des zweiten Bildframes.

2. Verfahren nach Anspruch 1, wobei der erste Bildframe ein 1. Bildframe in der ersten Animation ist; und
das Verfahren vor dem Bestimmen, durch die elektronische Einrichtung (100), zweiter Parameterinformationen eines zweiten Bildframes in der ersten Animation basierend auf ersten Parameterinformationen des ersten Bildframes unter Verwendung eines Surfaceflingers ferner Folgendes umfasst:

Erlangen der ersten Parameterinformationen mittels der ersten Anwendung unter Verwendung des Surfaceflinger-Moduls.

3. Verfahren nach Anspruch 1, wobei das Verfahren nach dem Anzeigen, durch die elektronische Einrichtung (100), des zweiten Bildframes ferner Folgendes umfasst:

   Empfangen, durch die elektronische Einrichtung (100), eines zweiten Vorgangs des Benutzers, wobei der zweite Vorgang dazu verwendet wird, Wiedergeben einer zweiten Animation der ersten Anwendung zu starten;
   Bestimmen, durch die elektronische Einrichtung (100), basierend auf dem zweiten Vorgang, dritter Parameterinformationen eines dritten Bildframes basierend auf den zweiten Parameterinformationen unter Verwendung des Surfaceflingers, wobei der dritte Bildframe ein 1. Bildframe in der zweiten Animation ist;
   Zusammenstellen, durch die elektronische Einrichtung (100), des dritten Bildframes basierend auf den dritten Parameterinformationen unter Verwendung des Surfaceflingers; und
   Anzeigen, durch die elektronische Einrichtung (100), des dritten Bildframes.

4. Verfahren nach Anspruch 3, wobei der zweite Bildframe ein letzter Bildframe in der ersten Animation ist; und das Verfahren vor dem Empfangen, durch die elektronische Einrichtung (100), eines zweiten Vorgangs des Benutzers ferner Folgendes umfasst: Anzeigen, durch die elektronische Einrichtung (100), einer ersten Benutzeroberfläche der ersten Anwendung nach dem Wiedergeben der ersten Animation.

5. Verfahren nach einem der Ansprüche 1 bis 4, wobei die dritten Parameterinformationen eines oder mehrere der Folgenden umfassen: eine Lage eines Mittelpunkts des dritten Bildframes, eine Fenstergröße des dritten Bildframes, eine Transparenz des dritten Bildframes und eine Größe abgerundeter Ecken des dritten Bildframes.

6. Elektronische Einrichtung (100), wobei die elektronische Einrichtung (100) eine erste elektronische Einrichtung ist und einen oder mehrere Prozessoren (110) und einen oder mehrere Speicher (121) umfasst;
   der eine oder die mehreren Speicher (121) an den einen oder die mehreren Prozessoren (110) gekoppelt sind, der eine oder die mehreren Speicher (121) dazu konfiguriert sind, einen Computerprogrammcode zu speichern, der Computerprogrammcode Computeranweisungen umfasst und der eine oder die mehreren Prozessoren (110) die Computeranweisungen aufrufen, um die elektronische Einrichtung (100) in die Lage zu versetzen, die folgenden Vorgänge durchzuführen:

   Empfangen eines ersten Vorgangs eines Benutzers, wobei der erste Vorgang dazu verwendet wird, Wiedergeben einer ersten Animation einer ersten Anwendung zu starten;
   Anzeigen eines ersten Bildframes in der ersten Animation basierend auf dem ersten Vorgang und Bestimmen zweiter Parameterinformationen eines zweiten Bildframes in der ersten Animation basierend auf ersten Parameterinformationen des ersten Bildframes unter Verwendung eines Surfaceflinger-Moduls;
   Zusammenstellen des zweiten Bildframes basierend auf den zweiten Parameterinformationen unter Verwendung des Surfaceflingers; und
   Anzeigen des zweiten Bildframes;
   wobei, bevor die elektronische Einrichtung (100) den ersten Bildframe in der ersten Animation anzeigt, der eine oder die mehreren Prozessoren (110) insbesondere dazu konfiguriert sind, die Computeranweisungen aufzurufen, um die elektronische Einrichtung (100) in die Lage zu versetzen, die folgenden Vorgänge durchzuführen:

   Erstellen eines neuen Animationsverarbeitungsthreads in dem Surfaceflinger; und
   Bestimmen der zweiten Parameterinformationen des zweiten Bildframes basierend auf den ersten Parameterinformationen des ersten Bildframes unter Verwendung des neuen Animationsverarbeitungsthreads, wobei der neue Animationsverarbeitungsthread nur zum Verarbeiten des ersten und des zweiten Bildframes der ersten Animation verwendet wird;
   wobei der eine oder die mehreren Prozessoren (110) insbesondere dazu konfiguriert sind, die Computeranweisungen aufzurufen, um die elektronische Einrichtung (100) in die Lage zu versetzen, den folgenden Vorgang durchzuführen:

   Erlangen der zweiten Parameterinformationen mittels eines Interpolationsvorgangs basierend auf den ersten Parameterinformationen unter Verwendung des Surfaceflingers; und
   wobei die ersten Parameterinformationen eines oder mehrere der Folgenden umfassen: eine Lage eines Mittelpunkts des ersten Bildframes, eine Fenstergröße des ersten Bildframes, eine Transparenz des ersten Bildframes und eine Größe abgerundeter Ecken des ersten Bildframes; und

die zweiten Parameterinformationen eines oder mehrere der Folgenden umfassen: eine Lage eines Mittelpunkts des zweiten Bildframes, eine Fenstergröße des zweiten Bildframes, eine Transparenz des zweiten Bildframes und eine Größe abgerundeter Ecken des zweiten Bildframes.

7. Elektronische Einrichtung (100) nach Anspruch 6, wobei der erste Bildframe ein 1. Bildframe in der ersten Animation ist; und, bevor die elektronische Einrichtung (100) die zweiten Parameterinformationen des zweiten Bildframes in der ersten Animation basierend auf den ersten Parameterinformationen des ersten Bildframes unter Verwendung des Surfaceflingers bestimmt, der eine oder die mehreren Prozessoren insbesondere dazu konfiguriert sind, die Computeranweisungen aufzurufen, um die elektronische Einrichtung (100) in die Lage zu versetzen, den folgenden Vorgang durchzuführen:
Erlangen der ersten Parameterinformationen mittels der ersten Anwendung unter Verwendung des Surfaceflingers.

8. Elektronische Einrichtung (100) nach Anspruch 6, wobei, nachdem die elektronische Einrichtung (100) den zweiten Bildframe anzeigt, der eine oder die mehreren Prozessoren insbesondere dazu konfiguriert sind, die Computeranweisungen aufzurufen, um die elektronische Einrichtung (100) in die Lage zu versetzen, die folgenden Vorgänge durchzuführen:

Empfangen eines zweiten Vorgangs des Benutzers, wobei der zweite Vorgang dazu verwendet wird, Wiedergeben einer zweiten Animation der ersten Anwendung zu starten;
Bestimmen, basierend auf dem zweiten Vorgang, dritter Parameterinformationen eines dritten Bildframes basierend auf den zweiten Parameterinformationen unter Verwendung des Surfaceflingers, wobei der dritte Bildframe ein 1. Bildframe in der zweiten Animation ist;
Zusammenstellen des dritten Bildframes basierend auf den dritten Parameterinformationen unter Verwendung des Surfaceflingers; und
Anzeigen des dritten Bildframes.

9. Elektronische Einrichtung (100) nach Anspruch 8, wobei der zweite Bildframe ein letzter Bildframe in der ersten Animation ist; und, bevor die elektronische Einrichtung (100) den zweiten Vorgang des Benutzers empfängt, der eine oder die mehreren Prozessoren insbesondere dazu konfiguriert sind, die Computeranweisungen aufzurufen, um die elektronische Einrichtung (100) in die Lage zu versetzen, den folgenden Vorgang durchzuführen:
Anzeigen einer ersten Benutzeroberfläche der ersten Anwendung nach dem Wiedergeben der ersten Animation.

10. Elektronische Einrichtung nach einem der Ansprüche 6 bis 9, wobei
die dritten Parameterinformationen eines oder mehrere der Folgenden umfassen: eine Lage eines Mittelpunkts des dritten Bildframes, eine Fenstergröße des dritten Bildframes, eine Transparenz des dritten Bildframes und eine Größe abgerundeter Ecken des dritten Bildframes.

11. Computerlesbares Speichermedium, umfassend Anweisungen, wobei, wenn die Anweisungen auf einer elektronischen Einrichtung (100) umgesetzt werden, die elektronische Einrichtung (100) in die Lage versetzt wird, das Verfahren nach einem der Ansprüche 1 bis 5 durchzuführen.

12. Computerprogramm, umfassend Anweisungen, die, wenn das Programm durch einen Prozessor ausgeführt wird, den Prozessor dazu veranlassen, das Verfahren nach einem der Ansprüche 1 bis 5 zu implementieren.

13. Computerprogrammprodukt, das Anweisungen beinhaltet, die, wenn das Computerprogrammprodukt auf einer elektronischen Einrichtung umgesetzt wird, die elektronische Einrichtung in die Lage versetzen, das Verfahren nach einem der Ansprüche 1 bis 5 durchzuführen.

**Revendications**

1. Procédé de calcul d'animation, dans lequel le procédé comprend :

la réception, par un dispositif électronique (100), d'une première opération d'un utilisateur, dans lequel la première opération est utilisée pour démarrer la lecture d'une première animation d'une première application ;
l'affichage, par le dispositif électronique (100), d'une première trame d'image dans la première animation sur la base de la première opération, et la détermination de deuxièmes informations de paramètre d'une deuxième trame d'image dans la première animation sur la base de premières informations de paramètre de la première trame d'image à l'aide d'un module surfaceflinger ;
la composition, par le dispositif électronique (100), de la deuxième trame d'image sur la base des deuxièmes informations de paramètre à l'aide du surfaceflinger ; et

l'affichage, par le dispositif électronique (100), de la deuxième trame d'image ;

dans lequel avant l'affichage, par le dispositif électronique (100), d'une première trame d'image dans la première animation, le procédé comprend également :

la création, par le dispositif électronique (100), d'un nouveau fil de traitement d'animation dans le surfaceflinger ; et
la détermination, par le dispositif électronique (100), de deuxièmes informations de paramètre d'une deuxième trame d'image dans la première animation sur la base de premières informations de paramètre de la première trame d'image à l'aide d'un module surfaceflinger comprend :

la détermination, par le dispositif électronique (100), des deuxièmes informations de paramètre de la deuxième trame d'image sur la base des premières informations de paramètre de la première trame d'image à l'aide du nouveau fil de traitement d'animation ; dans lequel le nouveau fil de traitement d'animation est utilisé uniquement pour le traitement des première et deuxième trames d'image de la première animation ;
dans lequel la détermination, par le dispositif électronique (100), de deuxièmes informations de paramètre d'une deuxième trame d'image sur la base de premières informations de paramètre de la première trame d'image à l'aide d'un surfaceflinger comprend :

l'obtention, par le dispositif électronique (100), des deuxièmes informations de paramètre par l'intermédiaire d'une opération d'interpolation sur la base des premières informations de paramètre à l'aide du surfaceflinger ; et
dans lequel les premières informations de paramètre comprennent l'un quelconque ou plusieurs des éléments suivants : un emplacement d'un point central de la première trame d'image, une taille de fenêtre de la première trame d'image, la transparence de la première trame d'image, et une taille de coin arrondi de la première trame d'image ; et
les deuxièmes informations de paramètre comprennent l'un quelconque ou plusieurs des éléments suivants : un emplacement d'un point central de la deuxième trame d'image, une taille de fenêtre de la deuxième trame d'image, la transparence de la deuxième trame d'image, et une taille de coin arrondi de la deuxième trame d'image.

**2.** Procédé selon la revendication 1, dans lequel la première trame d'image est la 1ère trame d'image dans la première animation ; et
avant la détermination, par le dispositif électronique (100), de deuxièmes informations de paramètre d'une deuxième trame d'image dans la première animation sur la base de premières informations de paramètre de la première trame d'image à l'aide d'un surfaceflinger, le procédé comprend également :
l'obtention des premières informations de paramètres par l'intermédiaire de la première application à l'aide du module surfacelinger.

**3.** Procédé selon la revendication 1, dans lequel après l'affichage, par le dispositif électronique (100), de la deuxième trame d'image, le procédé comprend également :

la réception, par le dispositif électronique (100), d'une seconde opération de l'utilisateur, dans lequel la seconde opération est utilisée pour démarrer la lecture d'une seconde animation de la première application ;
la détermination, par le dispositif électronique (100) sur la base de la seconde opération, de troisièmes informations de paramètre d'une troisième trame d'image sur la base des deuxièmes informations de paramètre à l'aide du surfaceflinger, dans lequel la troisième trame d'image est une 1ère trame d'image dans la seconde animation ;
la composition, par le dispositif électronique (100), de la troisième trame d'image sur la base des troisièmes informations de paramètre à l'aide du surfaceflinger ; et
l'affichage, par le dispositif électronique (100), de la troisième trame d'image.

**4.** Procédé selon la revendication 3, dans lequel la deuxième trame d'image est une dernière trame d'image dans la première animation ; et avant la réception, par le dispositif électronique (100), d'une seconde opération de l'utilisateur, le procédé comprend également :
l'affichage, par le dispositif électronique (100), d'une première interface utilisateur de la première application après la lecture de la première animation.

**5.** Procédé selon l'une quelconque des revendications 1 à 4, dans lequel
les troisièmes informations de paramètre comprennent l'un quelconque ou plusieurs des éléments suivants : un emplacement d'un point central de la troisième trame d'image, une taille de fenêtre de la troisième trame d'image, la transparence de la troisième trame d'image, et une taille de coin arrondi de la troisième trame d'image.

**6.** Dispositif électronique (100), dans lequel le dispositif électronique (100) est un premier dispositif électronique, et comprend un ou plusieurs processeurs (110) et une ou plusieurs mémoires (121) ;
les une ou plusieurs mémoires (121) sont couplées aux un ou plusieurs processeurs (110), les une ou plusieurs mémoires (121) sont configurées pour stocker un code de programme informatique, le code de programme informatique comprend des instructions informatiques, et les un ou plusieurs processeurs (110) invoquent les instructions informatiques, pour permettre au dispositif électronique (100) de réaliser les opérations suivantes :

la réception d'une première opération d'un utilisateur, dans lequel la première opération est utilisée pour démarrer la lecture d'une première animation d'une première application ;
l'affichage d'une première trame d'image dans la première animation sur la base de la première opération, et la détermination de deuxièmes informations de paramètre d'une deuxième trame d'image dans la première animation sur la base de premières informations de paramètre de la première trame d'image à l'aide d'un module surfaceflinger ;
la composition de la deuxième trame d'image sur la base des deuxièmes informations de paramètre à l'aide du surfaceflinger ; et
l'affichage de la deuxième trame d'image ;
dans lequel avant que le dispositif électronique (100) n'affiche la première trame d'image dans la première animation, les un ou plusieurs processeurs (110) sont spécifiquement configurés pour invoquer les instructions informatiques, pour permettre au dispositif électronique (100) de réaliser les opérations suivantes :

la création d'un nouveau fil de traitement d'animation dans le surfaceflinger ; et
la détermination des deuxièmes informations de paramètre de la deuxième trame d'image sur la base des premières informations de paramètre de la première trame d'image à l'aide du nouveau fil de traitement d'animation, dans lequel le nouveau fil de traitement d'animation est utilisé uniquement pour le traitement des première et deuxième trames d'image de la première animation ;
dans lequel les un ou plusieurs processeurs (110) sont spécifiquement configurés pour invoquer les instructions informatiques, pour permettre au dispositif électronique (100) de réaliser l'opération suivante :

l'obtention des deuxièmes informations de paramètre par l'intermédiaire d'une opération d'interpolation sur la base des premières informations de paramètre à l'aide du surfaceflinger ; et
dans lequel les premières informations de paramètre comprennent l'un quelconque ou plusieurs des éléments suivants : un emplacement d'un point central de la première trame d'image, une taille de fenêtre de la première trame d'image, la transparence de la première trame d'image, et une taille de coin arrondi de la première trame d'image ; et
les deuxièmes informations de paramètre comprennent l'un quelconque ou plusieurs des éléments suivants : un emplacement d'un point central de la deuxième trame d'image, une taille de fenêtre de la deuxième trame d'image, la transparence de la deuxième trame d'image, et une taille de coin arrondi de la deuxième trame d'image.

**7.** Dispositif électronique (100) selon la revendication 6, dans lequel la première trame d'image est une 1ère trame d'image dans la première animation ; et
avant que le dispositif électronique (100) ne détermine les deuxièmes informations de paramètre de la deuxième trame d'image dans la première animation sur la base des premières informations de paramètre de la première trame d'image à l'aide du surfaceflinger, les un ou plusieurs processeurs sont spécifiquement configurés pour invoquer les instructions informatiques, pour permettre au dispositif électronique (100) de réaliser l'opération suivante :
l'obtention des premières informations de paramètres par l'intermédiaire de la première application à l'aide du surfaceflinger.

**8.** Dispositif électronique (100) selon la revendication 6, dans lequel après que le dispositif électronique (100) a affiché la deuxième trame d'image, les un ou plusieurs processeurs sont spécifiquement configurés pour invoquer les instructions informatiques, pour permettre au dispositif électronique (100) de réaliser les opérations suivantes :

la réception d'une seconde opération de l'utilisateur, dans lequel la seconde opération est utilisée pour démarrer la lecture d'une seconde animation de la première application ;

la détermination, sur la base de la seconde opération, de troisièmes informations de paramètre d'une troisième trame d'image sur la base des deuxièmes informations de paramètre à l'aide du surfaceflinger, dans lequel la troisième trame d'image est une 1$^{ère}$ trame d'image dans la seconde animation ;

la composition de la troisième trame d'image sur la base des troisièmes informations de paramètre à l'aide du surfaceflinger ; et

l'affichage de la troisième trame d'image.

9. Dispositif électronique (100) selon la revendication 8, dans lequel la deuxième trame d'image est une dernière trame d'image dans la première animation ; et avant que le dispositif électronique (100) ne reçoive la seconde opération de l'utilisateur, les un ou plusieurs processeurs sont spécifiquement configurés pour invoquer les instructions informatiques, pour permettre au dispositif électronique (100) de réaliser l'opération suivante :

l'affichage d'une première interface utilisateur de la première application après la lecture de la première animation.

10. Dispositif électronique selon l'une quelconque des revendications 6 à 9, dans lequel

les troisièmes informations de paramètre comprennent l'un quelconque ou plusieurs des éléments suivants : un emplacement d'un point central de la troisième trame d'image, une taille de fenêtre de la troisième trame d'image, la transparence de la troisième trame d'image, et une taille de coin arrondi de la troisième trame d'image.

11. Support de stockage lisible par ordinateur, comprenant des instructions, dans lequel, lorsque les instructions sont exécutées sur un dispositif électronique (100), le dispositif électronique (100) est activé pour réaliser le procédé selon l'une quelconque des revendications 1 à 5.

12. Programme informatique comprenant des instructions qui, lorsque le programme est exécuté par un processeur, amènent le processeur à mettre en œuvre le procédé selon l'une quelconque des revendications 1 à 5.

13. Produit de programme informatique comportant des instructions qui, lorsque le produit de programme informatique est exécuté sur un dispositif électronique, le dispositif électronique est activé pour réaliser le procédé selon l'une quelconque des revendications 1 à 5.

Moment t5

Moment t4

Moment t3

Moment t2

Moment t1

805

806

FIG. 1A

FIG. 1B

FIG. 1C

FIG. 1D

FIG. 1E

FIG. 1F

**User interface 10**

08:08

Friday, February 9

6°C
Beijing

File management
1009

Email
1010

Music
1011

Health
1012

Huawei video
1013

Weather
1014

Camera
1015

Contacts
1016

Phone
1017

Messages
1018

FIG. 1G

FIG. 1H

EP 4 325 355 B1

FIG. 1I

EP 4 325 355 B1

EP 4 325 355 B1

User interface 30

FIG. 1J

User interface 30

08:08

08:08

6°C
eijing

Music
303

ather
06

Camera
307

Contacts
308

Phone
309

Messages
310

1003

1007

1006

1002

g

h

A

B

FIG. 1K

**User interface 30**

Huawei video

See all over the world

1003

1008

1006

1002

A

B

i

j

FIG. 1L

**User interface 40**

FIG. 1M

FIG. 2A

FIG. 2B

FIG. 2C

FIG. 2D

FIG. 2E

FIG. 2F

FIG. 2G

FIG. 2H

FIG. 2I

2003

B

A

d

c

2002

2001

2005

08:08

08:08

Friday, February 9

6°C
Beijing

File
management
301

Email
302

Music
303

Health
305

Huawei video
304

Weather
306

Camera
307

Contacts
308

Phone
309

Messages
310

FIG. 2J

EP 4 325 355 B1

FIG. 2K

EP 4 325 355 B1

FIG. 2L

Huawei video

See all over the world

2012

2003

2011  2002  2013

2009

2007

2001

k

A

l

B

FIG. 2M

User interface 30

FIG. 3A

**User interface 30**

08:08

Friday, February 9

3005

6°C
Beijing

File
managen
301

Music
303

3004

3001

Heal
305

Weather
306

3006

Camera
307

Contacts
308

Phone
309

Messages
310

FIG. 3B

User interface 30

FIG. 3C

User interface 30

08:08

08:08

3009

Friday, February 9

6°C
Beijing

File
manager
301

3001

Music
303
3004

Health
305

Weather
306

3010

Camera
307

Contacts
308

Phone
309

Messages
310

FIG. 3D

User interface 30

FIG. 3E

FIG. 4A

FIG. 4B

Electronic device 100

First application

AMS (activity manager service) module

WMS (window manager service) module

S501: The first application starts

S502: Start an activity

S503: Binder instruction

S504: Set the activity as visible

S505: Set a lifecycle of the activity

S506: Notification indicating that a start animation prepares to be started

S507: Create a first animation leash object

S508: First animation leash object

S509: Obtain initial parameter information of an image frame in the start animation, obtain target parameter information of a next image frame based on the initial parameter information of the image frame in the start animation, and change an attribute value of the first animation leash object based on the target parameter information of the next image frame

~
TO
FIG. 5B

~
TO
FIG. 5B

~
TO
FIG. 5B

FIG. 5A

CONT.
FROM
FIG. 5A

CONT.
FROM
FIG. 5A

CONT.
FROM
FIG. 5A

S510: Send the start animation to a display for playback

S511: The first application exits

S512: Binder instruction

S513: Create a new second animation leash object

S514: Send the second animation leash object

S515: Obtain initial parameter information of an image frame in an exit animation, obtain target parameter information of a next image frame based on the initial parameter information of the image frame in the exit animation, and change an attribute value of the second animation leash object based on the target parameter information of the next image frame

S516: Send the exit animation to the display for playback

FIG. 5B

66

**UI thread of a first application**

Message queue

| Process an $n^{th}$ image frame in a start animation | ... | Process an $(m+2)^{th}$ image frame in the start animation | Process an $(m+1)^{th}$ image frame in the start animation | Process an $m^{th}$ image frame in the start animation | Process an $(m-1)^{th}$ image frame in the start animation | ... | Process a $1^{st}$ image frame in the start animation |

Time

CPU   m−1   m   m+1   m+2   m+3

GPU   m−1   m   m+1   m+2   m+3

Display   Display m−1   Display m   Display m+1   Display m+2

Vsync   Fixed period   Vsync   Fixed period   Vsync   Vsync

FIG. 6

**UI thread of a first application**

Message queue

| Process an $n^{th}$ image frame in a start animation | ... | Process an $(m+2)^{th}$ image frame in the start animation | Process an $(m+1)^{th}$ image frame in the start animation | Interface layout | Process an $m^{th}$ image frame in the start animation | Process an $(m-1)^{th}$ image frame in the start animation | ... | Process a $1^{st}$ image frame in the start animation |

Time

CPU   m−1     m        m+1        m+2        m+3

GPU        m−1        m     Interface layout  m+1     m+2        m+3

Display          Display m−1     Display m     Display m     Display m+2

Vsync   Fixed period   Vsync   Fixed period   Vsync              Vsync

Discard the $(m+1)^{th}$ image frame

FIG. 7

Antenna 1      Antenna 2

| Mobile communication module 2G/3G/4G/5G [150] | Wireless communication module BT/WLAN/GNSS/NFC/IR/FM [160] |

Electronic device 100

Speaker [170A]
Receiver [170B]
Microphone [170C]
Headset jack [170D]

Audio module [170]

Displays 1 to N [194]
Cameras 1 to N [193]
Indicator [192]
Motor [191]
Button [190]
Internal memory [121]
SIM card interfaces 1 to N [195]
External memory interface [120]

Processor [110]

USB port [130]

Charging input

Charging management module [140]

Power management module [141]

Battery [142]

Sensor module [180]
Pressure sensor [180A]
Gyro sensor [180B]
Barometric pressure sensor [180C]
Magnetic sensor [180D]
Acceleration sensor [180E]
Distance sensor [180F]
Optical proximity sensor [180G]
Fingerprint sensor [180H]
Temperature sensor [180J]
Touch sensor [180K]
Ambient light sensor [180L]
Bone conduction sensor [180M]

FIG. 8

| Application layer | Camera | Calendar | Map | WLAN | Music | Messages |
|---|---|---|---|---|---|---|
| | Gallery | Phone | Navigation | Bluetooth | Videos | ... |

| Application framework layer | Window manager | Content provider | Phone manager | Resource manager |
|---|---|---|---|---|
| | Notification manager | View system | ... | |

| System library | Surface manager | Three-dimensional graphics processing library | Android runtime |
|---|---|---|---|
| | Two-dimensional graphics engine | Media library | ... |

| Kernel layer | Display driver | Camera driver | |
|---|---|---|---|
| | Audio driver | Sensor driver | ... |

FIG. 9

FIG. 10

(a)

(b)

(c)

FIG. 11

Electronic device 100

| First application | AMS (activity manager service) module | WMS (window manager service) module | SF (surfaceflinger module) |

S1201: The first application starts

S1202: Start an activity

S1203: Binder instruction

S1204: Set the activity as visible

S1205: Set a lifecycle of the activity

S1206: Notification indicating that a start animation prepares to be started

S1207: Create a first animation leash object

S1208: Send the first animation leash object

S1209: Obtain initial parameter information of an image frame in the start animation

**S1210: Initial parameter information of the image frame in the start animation**

TO
FIG. 12B

TO
FIG. 12B

TO
FIG. 12B

TO
FIG. 12B

FIG. 12A

CONT.
FROM
FIG. 12A

CONT.
FROM
FIG. 12A

CONT.
FROM
FIG. 12A

CONT.
FROM
FIG. 12A

**S1211: Obtain target parameter information of a next image frame based on the initial parameter information of the image frame in the start animation, and change an attribute value of the first animation leash object based on the target parameter information of the next image frame**

**S1212: Send the start animation to a display for playback**

S1213: The first application exits

S1214: Binder instruction

S1215: Create a new second animation leash object

S1216: Send the second animation leash object

S1217: Obtain initial parameter information of an image frame in an exit animation

**S1218: Initial parameter information of the image frame in the exit animation**

**S1219: Obtain target parameter information of a next image frame based on the initial parameter information of the image frame in the exit animation, and change an attribute value of the second animation leash object based on the target parameter information of the next image frame**

**S1220: Send the exit animation to the display for playback**

FIG. 12B

S1301: An electronic device 100 receives a first operation of a user to start a task item of playing an animation of a first application

S1302: The electronic device 100 obtains second parameter information of a second image frame based on first parameter information of a first image frame by using a surfaceflinger module

S1303: The electronic device 100 composes the second image frame based on the second parameter information of the second image frame by using the surfaceflinger module

S1304: The electronic device 100 sends the second image frame to a display for display by using the surfaceflinger module

FIG. 13

**Animation thread of a
surfaceflinger module**

Message queue

| Process an $n^{th}$ image frame in a start animation | ... | Process an $(m+2)^{th}$ image frame in the start animation | Process an $(m+1)^{th}$ image frame in the start animation | Process an $m^{th}$ image frame in the start animation | Process an $(m-1)^{th}$ image frame in the start animation | ... | Process a $1^{st}$ image frame in the start animation |
|---|---|---|---|---|---|---|---|

Time

CPU  m–1  m  m+1  m+2  m+3

GPU  m–1  m  m+1  m+2  m+3

Display | Display m–1 | Display m | Display m+1 | Display m+2 |

Vsync  Fixed period  Vsync  Fixed period  Vsync  Vsync

FIG. 14

**EP 4 325 355 B1**

## REFERENCES CITED IN THE DESCRIPTION

**Patent documents cited in the description**

- WO 2017092343 A1